# EUROPEAN PATENT APPLICATION

(11) **EP 3 975 392 A1**
(43) Date of publication of application: **30.03.2022**
(21) Application number: 20845932.1
(22) Date of filing: 29.07.2020
(51) Int. Cl.: H02K 5/20, H02K 9/19

(54) **STATOR COOLING STRUCTURE**

(30) Priority: 30.07.2019 JP 2019139667
(71) Applicant: AISIN CORPORATION, Aichi 448-8650 (JP); Art Metal Mfg. Co., Ltd., Ueda-shi, Nagano 386-0027 (JP)
(72) Inventor: MURAKAMI Satoshi, Kariya-shi, Aichi 448-8650 (JP); IKEDA Masaki, Kariya-shi, Aichi 448-8650 (JP); OKAZAWA Toshihiko, Kariya-shi, Aichi 448-8650 (JP)
(74) Representative: Kramer Barske Schmidtchen Patentanwälte PartG mbB
(86) International application number: PCT/JP2020/029134
(87) International publication number: WO 2021/020468

(57) **Abstract**

There is disclosed a stator cooling structure (402) including a supporting member (60, 60A) that is a single piece member having a cylindrical form going in an axial direction (X) of a rotating electrical machine (10) and that supports a stator core (112) of the rotating electrical machine and forms a passage (95, 195, 35, 135) through which fluid for cooling passes. The supporting member has an inner wall part (651) that supports an outer circumferential surface of the stator core and has a cylindrical form; an outer wall part (653) that faces a radial outer side of the inner wall part and has a cylindrical form; and one or more division wall parts (359, 958, 1951, 1351) that extend in a radial direction between the inner wall part and the outer wall part and divide the passage formed between the inner wall part and the outer wall part.

## Description

### TECHNICAL FIELD

The present disclosure relates to a stator cooling structure.

### BACKGROUND ART

There is known a technique in which a supporting member on a radial inner side that forms a cooling water passage and a supporting member on a radial outer side that forms a case oil passage are formed of different pieces, and the supporting member on the radial inner side and the supporting member on the radial outer side are stacked in a radial direction and provided around a stator core (see, for example, Patent Literature 1).

### CITATIONS LIST

### PATENT LITERATURE

Patent Literature 1: WO 2020/017101 A

### SUMMARY OF INVENTION

### TECHNICAL PROBLEMS

However, in a conventional technique such as that described above, upon fitting together the supporting member on the radial inner side and the supporting member on the radial outer side, in terms of assembly properties and strength, there is a need to set a radial gap between the supporting member on the radial inner side and the supporting member on the radial outer side or to allow the supporting member on the radial inner side that receives contraction force by tightening to have a relatively large radial thickness, which is likely to cause an increase in radial physical size. In addition, although flow of cooling water and oil is controlled by using division wall parts that extend in a radial direction and divide passages, flow of cooling water or oil that goes over the division wall parts through a gap that can be created between the pieces is likely to occur. If such flow of cooling water or oil that goes over the division wall parts occurs, then cooling performance may somewhat decrease.

Therefore, in one aspect, the present invention efficiently cools a stator core.

### SOLUTIONS TO PROBLEMS

According to one aspect of the present disclosure, there is provided a stator cooling structure including a supporting member that supports a stator core of a rotating electrical machine and forms a passage through which fluid for cooling passes, the supporting member being a single piece member having a cylindrical form going in an axial direction of a rotating electrical machine, in which
the supporting member has:
an inner wall part that supports an outer circumferential surface of the stator core and has a cylindrical form;
an outer wall part that faces a radial outer side of the inner wall part and has a cylindrical form; and
one or more division wall parts that extend in a radial direction between the inner wall part and the outer wall part and divide the passage formed between the inner wall part and the outer wall part.

### ADVANTAGEOUS EFFECTS OF INVENTION

According to the present disclosure, it becomes possible to efficiently cool the stator core.

### BRIEF DESCRIPTION OF DRAWINGS

FIG. 1 is a diagram schematically showing an example of a vehicle drive device.
FIG. 2 is a diagram schematically showing an example of a configuration of a lubrication/cooling system of the vehicle drive device.
FIG. 3 is a perspective view showing an external appearance of a part of a motor to which a stator cooling structure of a first embodiment is applied.
FIG. 4 is a perspective view showing a cross section passing through a central axis of the motor of the first embodiment.
FIG. 5 is a cross-sectional view passing through the central axis of the motor of the first embodiment.
FIG. 6 is an enlarged view of the "Q1" portion of FIG. 5.
FIG. 7A is a perspective view showing an external appearance of a core for forming a cooling water passage in a supporting case of the first embodiment.
FIG. 7B is a perspective view showing an external appearance of a core for forming a case oil passage in the supporting case of the first embodiment.
FIG. 8 is a perspective view showing an external appearance of a part of a motor to which a stator cooling structure of a second embodiment is applied.
FIG. 9 is a perspective view showing an external appearance of a part of the motor as viewed from a different angle from that of FIG. 8.
FIG. 10 is a perspective view showing a cross section perpendicular to a central axis of the motor of the second embodiment.
FIG. 11 is a perspective view showing a cross section passing through the central axis of the motor of the second embodiment.
FIG. 12 is an enlarged view of the "P1" portion of FIG. 10.
FIG. 13 is an enlarged view of the "P2" portion of FIG. 11.
FIG. 14A is a perspective view showing external appearances of cores for forming a supporting case of the second embodiment.
FIG. 14B is a perspective view showing external appearances of the cores for forming the supporting case of the second embodiment.
FIG. 15A is another perspective view showing an external appearance of a core alone for a cooling water passage of the second embodiment.
FIG. 15B is another perspective view showing an external appearance of a core alone for a case oil passage of the second embodiment.
FIG. 16 is a cross-sectional view of a motor for describing a variant.
FIG. 17A is a schematic enlarged view of the "P3" portion of FIG. 16.
FIG. 17B is a schematic enlarged view of the "P4" portion of FIG. 16.
FIG. 17C is a schematic cross-sectional view that describes groove parts at base portions of circular cylindrical parts.
FIG. 17D is a schematic perspective view of a part (a base portion on a lower side) of one circular cylindrical part.
FIG. 18 is a plan view schematically showing a part of a core (cooling water passage).
FIG. 19A is a plan view showing a configuration of a portion of an axial passage part near an X2-side end part thereof.
FIG. 19B is a plan view showing a configuration of a portion of the axial passage part near an X1-side end part thereof.
FIG. 20A is a perspective view showing an external appearance of a core for forming a cooling water passage in annular form.
FIG. 20B is a perspective view showing an external appearance of a core for forming a case oil passage in annular form.

### DESCRIPTION OF EMBODIMENTS

Each embodiment will be described in detail below with reference to the accompanying drawings. Here, first, a vehicle drive device to which a stator cooling structure can be applied and a lubrication/cooling system (a lubrication/cooling system including the stator cooling structure) will be described, and then a heat exchanging and water cooling part related to the stator cooling structure will be described.

### <Vehicle drive device>

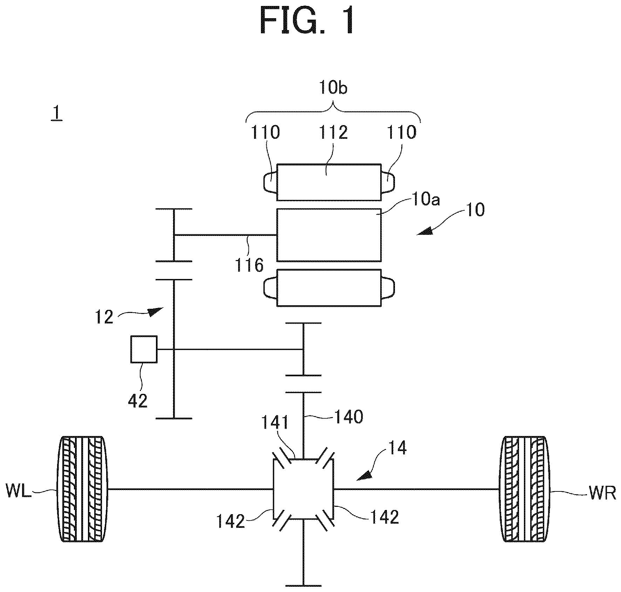

FIG. 1 is a diagram schematically showing an example of a vehicle drive device 1 to which a stator cooling structure can be applied. Note that FIG. 1 also shows drive wheels WL and WR.

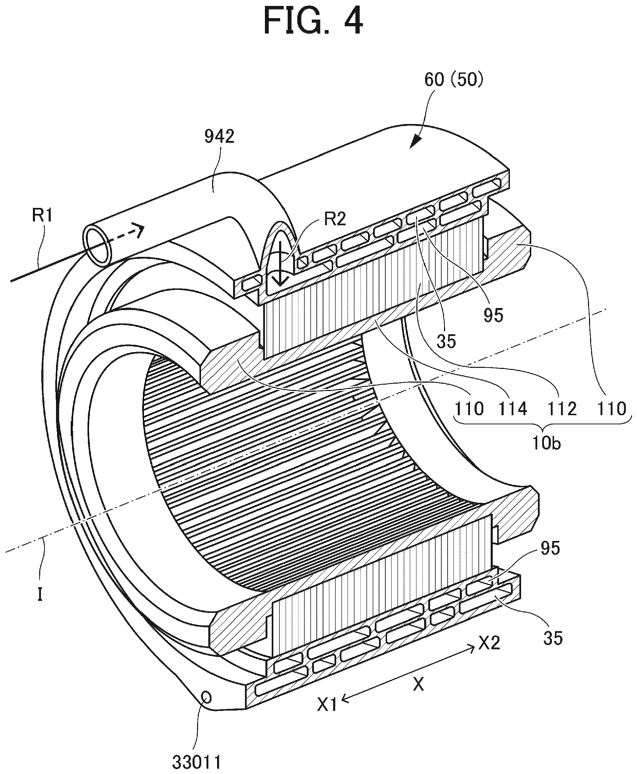

The vehicle drive device 1 is mounted on a vehicle. The vehicle drive device 1 includes a motor 10 (an example of a rotating electrical machine), a reduction mechanism 12, and a differential device 14 coupled to an output shaft 116 of the motor 10 with the reduction mechanism 12 therebetween. The motor 10 generates drive power of the vehicle. The motor 10 includes a rotor 10a and a stator 10b, and the stator 10b includes a stator core 112 and a coil 114 (see FIG. 4) which is placed on the stator lOb, and the coil 114 includes coil ends 110 at both axial ends thereof. Note that the stator core 112 may be formed of, for example, laminated steel sheets. The differential device 14 has the left and right drive wheels WL and WR coupled thereto. The differential device 14 includes a ring gear 140, a pinion gear 141, and side gears 142. In addition, the differential device 14 includes therein a differential case (not shown) that holds gears (the pinion gear 141, the side gears 142, etc.). Note that the configuration of the reduction mechanism 12 is not limited to a simple configuration shown in the drawing, and may include a planetary gear mechanism. Each component (the motor 10, the reduction mechanism 12, the differential device 14, etc.) of the vehicle drive device 1 may be, for example, incorporated in a housing (not shown) as a single vehicle drive device unit or incorporated in a plurality of different housings (not shown).

The vehicle drive device 1 includes a lubrication/cooling system 3 for lubricating and/or cooling the motor 10, the reduction mechanism 12, and the differential device 14 using oil. In the following, the term "lubrication/cooling" refers to at least either one of lubrication and cooling.

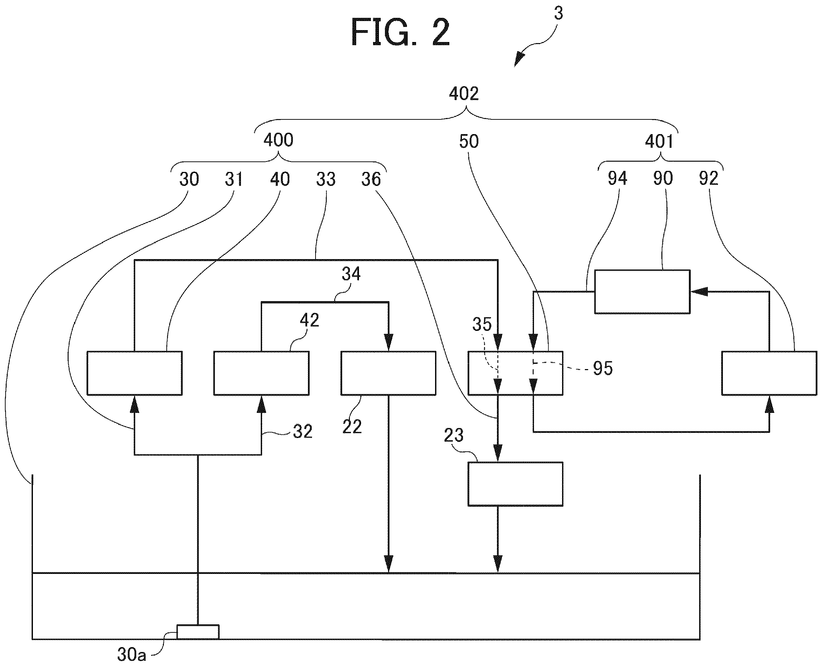

Note that although a stator cooling structure 402 (see FIG. 2) of one embodiment which will be described later is applied to, as an example, the motor 10 of the vehicle drive device 1 shown in FIG. 1, the stator cooling structure 402 which will be described later can also be applied to a motor included in a vehicle drive device having a configuration other than that of the vehicle drive device 1. Namely, the stator cooling structure 402 which will be described later can be applied to a vehicle drive device having any configuration including a motor such as the motor 10. In addition, the stator cooling structure 402 can also be applied to a configuration including a generator (another example of a rotating electrical machine) instead of a motor.

### <Lubrication/cooling system>

FIG. 2 is a diagram schematically showing an example of a configuration of the lubrication/cooling system 3 of the vehicle drive device 1.

The lubrication/cooling system 3 includes a tank 30, oil passages 31 to 36, a motor-driven oil pump 40, a mechanical oil pump 42, a heat exchanging and water cooling part 50, a water pump 90, a radiator 92 (an example of a heat exchanging part), and cooling water passages 94 and 95.

The tank 30 is formed of a lowermost part (a space on a lowermost side in a vertical direction) in a housing of the vehicle drive device 1. The tank 30 is formed of, for example, an oil pan. The tank 30 has the differential device 14 disposed therein, and the differential device 14 is immersed in oil in the tank 30. The differential device 14 is provided at a predetermined height which is defined in advance from a bottom side of the tank 30. The predetermined height is determined such that when the height of an oil level in the tank 30 is greater than or equal to a predetermined height which is defined in advance, oil in the tank 30 enters the differential case along with rotation of the differential device 14 (rotation of the differential case), by which lubrication/cooling of the differential device 14 is implemented in a desired manner. The tank 30 has a strainer 30a provided on the bottom side thereof.

The oil passage 31 is provided between the tank 30 and a suction side of the motor-driven oil pump 40. Upon the operation of the motor-driven oil pump 40, oil in the tank 30 is sucked into a suction port of the motor-driven oil pump 40 through the strainer 30a and the oil passage 31.

The oil passage 32 is provided between the tank 30 and a suction side of the mechanical oil pump 42. Upon the operation of the mechanical oil pump 42, oil in the tank 30 is sucked into a suction port of the mechanical oil pump 42 through the strainer 30a and the oil passage 32. Note that although in the example shown in FIG. 2, the oil passage 32 has a portion shared with the oil passage 31, the oil passage 32 may be formed independently of the oil passage 31 without the shared portion.

The oil passage 33 is provided between a discharge side of the motor-driven oil pump 40 and an inlet side of the heat exchanging and water cooling part 50. The oil passage 33 guides oil discharged from the motor-driven oil pump 40 to the heat exchanging and water cooling part 50. Thus, the oil discharged from the motor-driven oil pump 40 is cooled by the heat exchanging and water cooling part 50 and then supplied to the oil passage 36.

The oil passage 34 is provided between a discharge side of the mechanical oil pump 42 and the tank 30. The oil passage 34 guides oil discharged from the mechanical oil pump 42 to the tank 30. The oil passage 34 may include an oil passage formed in a member such as a shaft of a reduction mechanism, or a simple space. The simple space is a space in the housing of the vehicle drive device 1. Oil from the oil passage 34 is used for lubrication of a member (lubrication part 22) which is a lubrication target. The lubrication part 22 is, for example, a bearing in the motor 10.

The oil passage 35 is connected between the oil passage 33 and the oil passage 36 in such a manner that the oil passage 35 runs through the heat exchanging and water cooling part 50. Oil in the oil passage 35 is, as will be described later, cooled with a liquid coolant (cooling water) that passes through the cooling water passage 95.

Details of the oil passage 35 will be described later.

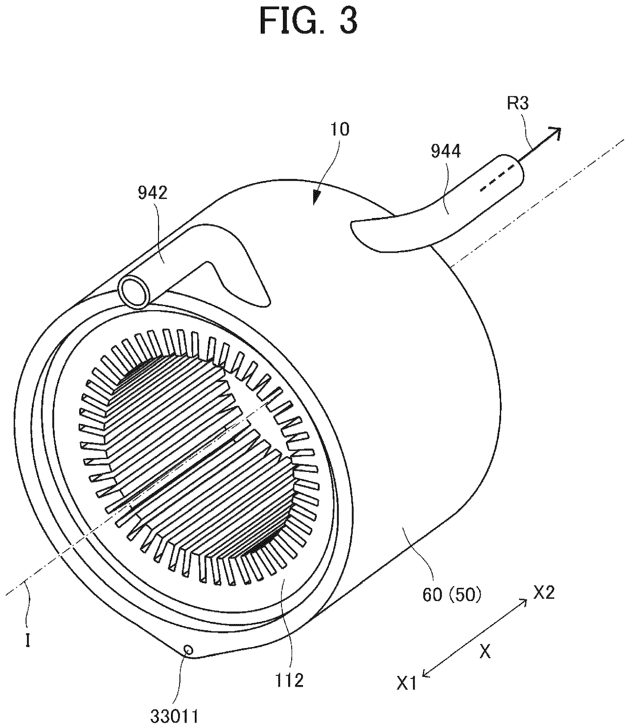

The oil passage 36 is provided between an outlet side of the heat exchanging and water cooling part 50 and the tank 30. The oil passage 36 guides oil from the heat exchanging and water cooling part 50 to the tank 30. The oil passage 36 may be an oil passage formed in a member such as an oil passage formed in the shaft of the reduction mechanism, an oil passage formed of a pipe, etc., and includes, for example, a space in the vehicle drive device 1 or a housing (e.g., a supporting case 60 of FIG. 3 which will be shown later) of the motor 10. In this case, oil from the heat exchanging and water cooling part 50 drips by gravity and is supplied to a member (cooling part 23) which is a cooling target, and then guided to the tank 30 by gravity. The cooling part 23 includes, for example, the coil ends 110 (see FIG. 1) of the stator 10b of the motor 10.

The motor-driven oil pump 40 is driven by a dedicated driving source (not shown) such as a motor, etc. The motor-driven oil pump 40 discharges oil in the tank 30 to the oil passage 33 upon operation. Namely, upon operation, the motor-driven oil pump 40 sucks oil in the tank 30 through the oil passage 31 and discharges the oil to the oil passage 33. The oil discharged to the oil passage 33 is guided to the oil passage 36 through the heat exchanging and water cooling part 50. Note that the motor-driven oil pump 40 is an oil pump of a type that operates independently of rotation of the wheels and operates by electricity. Note that the motor-driven oil pump 40 forms, with the tank 30, the oil passage 31, the oil passage 33, and the oil passage 36, an oil circulating part 400 that allows oil to circulate through the oil passage 35, but in a variant, the oil circulating part 400 may include other elements.

Upon operation, the mechanical oil pump 42 sucks oil in the tank 30 through the oil passage 32 and discharges the oil to the oil passage 34. The mechanical oil pump 42 operates along with forward rotation of the wheels (rotation in a forward direction). The mechanical oil pump 42 may be provided on any rotating member that rotates along with forward rotation of the wheels. For example, the mechanical oil pump 42 is provided on a countershaft of the reduction mechanism 12 (see FIG. 1) and operates by forward rotation of the countershaft of the reduction mechanism 12.

The heat exchanging and water cooling part 50 has both of a heat exchange function and a stator core water cooling function. Specifically, the heat exchanging and water cooling part 50 has the heat exchange function that implements heat exchange between oil in the oil passage 35 and cooling water in the cooling water passage 95, and a function (stator core water cooling function) of directly cooling the stator core 112 of the stator 10b of the motor 10 with cooling water. The cooling water is, for example, water including antifreeze or long life coolant (LLC).

Note that the heat exchanging and water cooling part 50 also functions as an oil cooler, but is not the same as an oil cooler in terms of that the heat exchanging and water cooling part 50 has, as a function other than the function of an oil cooler, the function of cooling the stator core 112 of the motor 10. By the lubrication/cooling system 3 including the heat exchanging and water cooling part 50, the lubrication/cooling system 3 can eliminate the need of any other oil cooler than the heat exchanging and water cooling part 50. In the present embodiment, the heat exchanging and water cooling part 50 is applied to the motor 10. Details of the heat exchanging and water cooling part 50 will be described later.

The water pump 90 is a pump that allows cooling water to circulate through the cooling water passages 94 and 95. Note that the water pump 90 forms, with the radiator 92 and the cooling water passage 94, a cooling water circulating part 401 that allows cooling water to circulate through the cooling water passage 95, but in a variant, the cooling water circulating part 401 may include other elements. Note also that the cooling water circulating part 401 forms the stator cooling structure 402 with the above-described oil circulating part 400 and heat exchanging and water cooling part 50, but in a variant, the stator cooling structure 402 may include other elements.

The radiator 92 removes heat from cooling water that passes through the cooling water passages 94 and 95 to cool the cooling water. The radiator 92 may implement heat exchange between air (e.g., air that passes through when the vehicle travels) and cooling water.

The cooling water passage 94 guides cooling water discharged from the water pump 90 to the cooling water passage 95 of the heat exchanging and water cooling part 50, and brings back the cooling water from the cooling water passage 95 of the heat exchanging and water cooling part 50 to the water pump 90 through the radiator 92. Note that the radiator 92 may be provided between the water pump 90 and the heat exchanging and water cooling part 50.

The cooling water passage 95 is formed in the heat exchanging and water cooling part 50. Cooling water can implement the above-described heat exchange function and stator core water cooling function of the heat exchanging and water cooling part 50 when passing through the cooling water passage 95. Details of the cooling water passage 95 will be described later.

Note that although in the example shown in FIG. 2, the motor-driven oil pump 40 and the mechanical oil pump 42 are provided, either one of the motor-driven oil pump 40 and the mechanical oil pump 42 may be omitted. In this case, the lubrication part 22 and the cooling part 23 may be lubricated and cooled with oil from the other one (the one that is not omitted) of the motor-driven oil pump 40 and the mechanical oil pump 42 without distinction.

In addition, in the example shown in FIG. 2, the oil passage 33 may be branched off and connected to the oil passage 34. In this case, oil from the motor-driven oil pump 40 is also supplied to the lubrication part 22. Alternatively, the oil passage 36 may be branched off and connected to the oil passage 34. In this case, oil from the heat exchanging and water cooling part 50 is also supplied to the lubrication part 22. Alternatively, the oil passage 34 may be branched off and connected to the oil passage 33. In addition, the oil passage 34 may be connected and integrated, on a wake side of the lubrication part 22, with a wake side of the cooling part 23 in the oil passage 36.

In addition, although in the example shown in FIG. 2, the cooling water passage 94 is connected only to the heat exchanging and water cooling part 50, the cooling water passage 94 may be formed so as to run through a member which is a cooling target, e.g., an inverter (not shown) for driving the motor 10 or a high voltage system battery (not shown) that drives the motor 10.

### <Heat exchanging and water cooling part>

Next, with reference to FIG. 3 and subsequent drawings, the heat exchanging and water cooling part 50 of one embodiment which is applied to the motor 10 will be described. Note that in FIG. 3 and subsequent drawings, in terms of maintaining clarity of the drawings, for elements present in plural number, only one of the elements may be given a reference sign.

In the following, heat exchanging and water cooling parts according to several embodiments that can be applied as the heat exchanging and water cooling part 50 in the stator cooling structure 402 will be separately described.

### [First Embodiment]

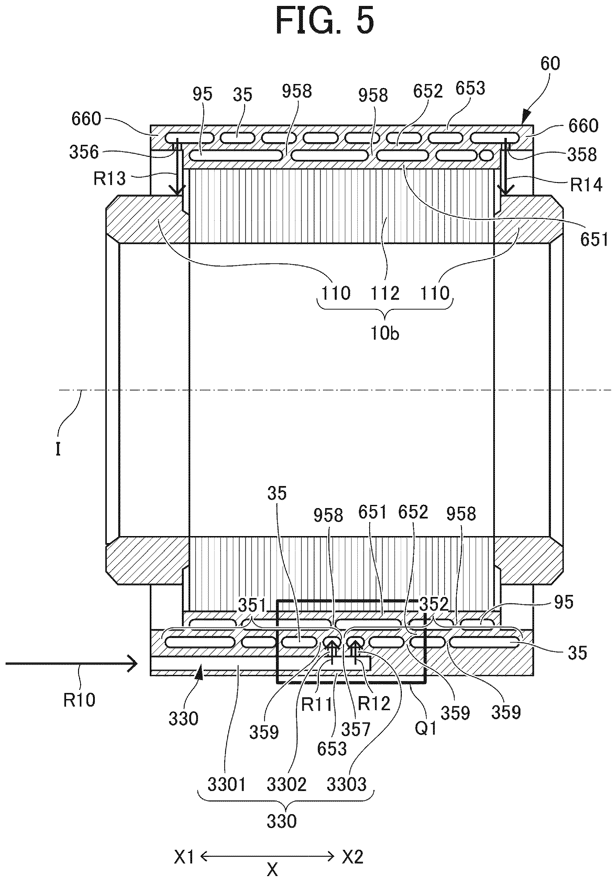

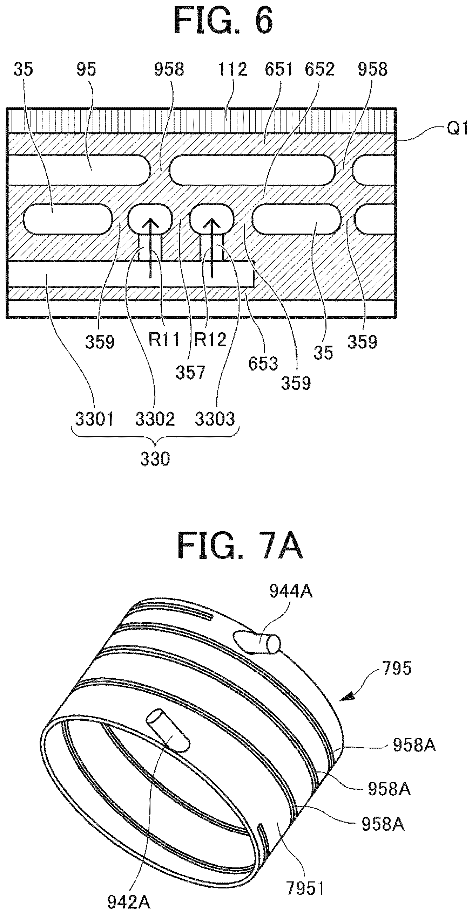

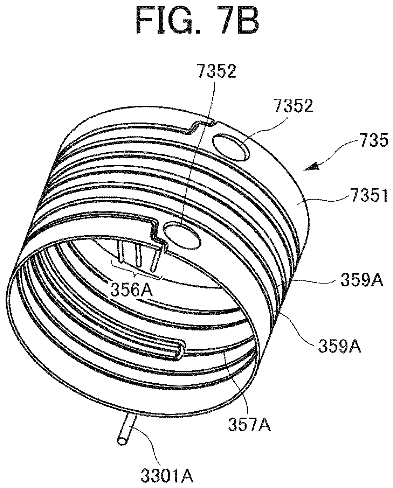

FIG. 3 is a perspective view showing an external appearance of a part of the motor 10 to which a heat exchanging and water cooling part 50 of a first embodiment is applied, FIG. 4 is a perspective view showing a cross section passing through a central axis I of the motor 10, FIG. 5 is a cross-sectional view passing through the central axis I of the motor 10, FIG. 6 is an enlarged view of the "Q1" portion of FIG. 5, and FIGS. 7A and 7B are illustrative diagrams of cores for forming a supporting case 60. Note that FIG. 5 is a cross-sectional view cut along a plane passing through an oil dripping part 356 and perpendicular to the central axis I. Note that in FIG. 3, etc., depiction of some elements such as the rotor 10a is omitted.

In the following, a radial direction is based on the central axis I of the motor 10 (= a central axis of the stator core 112) unless otherwise specifically mentioned. Note that an axial direction of the motor 10 corresponds to an X-direction. Note also that in the following description, an up-down direction represents an up-down direction in a mounted state of the motor 10 mounted such that the central axis I is substantially parallel to a horizontal direction.

The heat exchanging and water cooling part 50 includes the supporting case 60 (an example of a supporting member).

The supporting case 60 forms therein the oil passage 35 (see FIG. 2) and the cooling water passage 95 (see FIG. 2). The "oil passage 35" is hereinafter referred to as "case oil passage 35" and a structure of the case oil passage 35 will be described later. In addition, a structure of the cooling water passage 95 will be also described later.

As shown in FIGS. 4 and 5, the supporting case 60 has a cylindrical form and can function as a case of the motor 10. The supporting case 60 is made of a material with excellent thermal conductivity such as metal. For example, the supporting case 60 is made of aluminum with excellent corrosion resistance because, as will be described later, the cooling water passage 95 through which cooling water passes is formed. The supporting case 60 is structured to have hollow parts (cavities) that form the oil passage 35 and the cooling water passage 95 (see FIG. 2) as will be described later. The supporting case 60 having such hollow parts is a single piece member, and may be formed by casting or may be formed using 3D printing technology.

Specifically, the supporting case 60 may be formed using cores (inserts) 735 and 795 such as those shown in FIGS. 7A and 7B. Here, FIG. 7A schematically shows the core 795 for the cooling water passage 95, and FIG. 7B schematically shows the core 735 for the case oil passage 35. The supporting case 60 can be formed (cast) by setting such two cores 735 and 795 in a mold (not shown) in such a manner that the core 795 is disposed on the radial inner side of the core 735 with a gap provided therebetween in the radial direction, and pouring a molten metal material (a material of the supporting case 60, e.g., an aluminum alloy) into the mold. In this case, the cores 735 and 795 may be, for example, salt cores, and by pouring water onto the "cores 735 and 795" portions of a casting taken out of the mold, salt is dissolved and removed. As a result, the supporting case 60 can be manufactured in which the "core 735" portion serves as a space (a space such as the case oil passage 35, etc.), the "core 795" portion serves as a space (a space such as the cooling water passage 95, etc.), a radial gap between the core 735 and the core 795 (an annular gap extending in the axial direction over substantially the entire axial length of the supporting case 60) serves as a boundary wall part 652 (see FIGS. 5 and 6) (an example of a first partition wall part), a gap between an outer circumferential surface of the mold and a surface on a radial outer side of the core 735 (an annular gap extending in the axial direction over substantially the entire axial length of the supporting case 60) serves as an outside diameter side wall part 653 (see FIGS. 5 and 6), a gap between an inner circumferential surface of the mold and a surface on a radial inner side of the core 795 (an annular gap extending in the axial direction over substantially the entire axial length of the supporting case 60) serves as an inside diameter side wall part 651 (see FIGS. 5 and 6) (an example of an inner wall part), and gaps between the mold and both axial end surfaces of the cores 735 and 795 (annular gaps) serve as end wall parts 660 (see FIG. 5) (an example of end wall parts).

As shown in FIG. 5, the supporting case 60 holds the stator core 112 on a radial inner side thereof in such a manner that the supporting case 60 radially comes into contact with the stator core 112. Namely, the supporting case 60 holds the stator core 112 in such a manner that an inner circumferential surface of the supporting case 60 comes into contact with an outer circumferential surface of the stator core 112. For example, the supporting case 60 is integrated with the stator core 112 by shrink fitting, etc. In this manner, the supporting case 60 unrotatably supports the stator 10b including the stator core 112.

The supporting case 60 preferably holds the stator core 112 in such a manner that the inner circumferential surface of the supporting case 60 comes into contact with substantially the entire outer circumferential surface of the stator core 112 (in such a manner that the supporting case 60 and the stator core 112 come into surface contact with each other). In this case, the entire stator core 112 can be efficiently cooled with cooling water that passes through the cooling water passage 95 in the supporting case 60. In the present embodiment, as an example, as shown in FIG. 5, the supporting case 60 extends over the entire length in the X-direction of the stator core 112, and the inner circumferential surface of the supporting case 60 comes into contact with substantially the entire outer circumferential surface of the stator core 112. Note that the term "substantially the entire" outer circumferential surface of the stator core 112 is a concept that a location such as a welding groove (not shown) of the stator core 112 (a location where the outer circumferential surface of the stator core 112 and the inner circumferential surface of the supporting case 60 can be spaced apart from each other in the radial direction) is allowed.

In addition, as shown in FIG. 5, on an X2 side in the X-direction, the supporting case 60 extends in the X-direction to a point near a midpoint location of a coil end 110. In addition, as shown in FIG. 5, on an X1 side in the X-direction, the supporting case 60 extends in the X-direction to a point near a midpoint location of a coil end 110. Note, however, that in a variant, the supporting case 60 may extend in such a manner that on the X2 side in the X-direction and/or on the X1 side in the X-direction, the supporting case 60 extends beyond an end part(s) of the coil end(s) 110 in the X-direction.

As described above, the supporting case 60 forms therein the case oil passage 35 and the cooling water passage 95. Upon the formation, the stator core 112, the cooling water passage 95, and the case oil passage 35 are disposed so as to be adjacent to each other in this order from the radial inner side. Note that the term "adjacent" refers to a manner in which any other portion than material portions related to the supporting case 60 is not interposed.

In addition, as shown in FIGS. 5 and 6, the supporting case 60 may further form therein an inlet oil passage 330. In this case, as shown in FIG. 5, the inlet oil passage 330 may be formed on a radial outer side of the case oil passage 35. In this case, the inlet oil passage 330 is provided in a lowermost region (an example of a lower region) of the supporting case 60 in such a manner that the inlet oil passage 330 is adjacent to the case oil passage 35 from a radial outer side. The lowermost region of the supporting case 60 indicates the lowest location of the supporting case 60 and a region near the lowest location. The lowest region may be, for example, an area on the order of 60 degrees in a circumferential direction with a circumferential location corresponding to the lowest location being the center. Details of the inlet oil passage 330 will be described later.

The cooling water passage 95 is connected to an inlet water passage 942 (see FIGS. 3 and 4) and an outlet water passage 944 (see FIG. 3). Specifically, the cooling water passage 95 is connected at an end part on an upstream side thereof to the inlet water passage 942, and connected at an end part on a downstream side thereof to the outlet water passage 944. As shown in FIG. 3, the inlet water passage 942 and the outlet water passage 944 may be formed in such a manner that the inlet water passage 942 and the outlet water passage 944 protrude toward a radial outer side of the supporting case 60 from the radial outer side. Note that the core 795 shown in FIG. 7A has circular cylindrical parts 942A and 944A for forming the inlet water passage 942 and the outlet water passage 944, and the core 735 shown in FIG. 7B has holes 7352 for allowing the circular cylindrical parts 942A and 944A to pass therethrough.

The cooling water passage 95 extends in the circumferential direction in an axial extending area of the stator core 112. In the present embodiment, as an example, the cooling water passage 95 has a spiral form around the central axis I (see FIG. 7A). More specifically, the radial inner side of the cooling water passage 95 is partitioned by the inside diameter side wall part 651, the radial outer side of the cooling water passage 95 is partitioned by the boundary wall part 652, and both axial end parts of the cooling water passage 95 are blocked by the end wall parts 660. In an annular space thus formed (an annular space extending in the axial direction over substantially the entire axial length of the supporting case 60) there is disposed a spiral partition wall 958 (an example of a first division wall part) that extends in the radial direction from the inside diameter side wall part 651 to the boundary wall part 652. The cooling water passage 95 is connected at one axial end thereof (one end of a spirally connected form) to the inlet water passage 942, and connected at the other axial end thereof to the outlet water passage 944. Note that the core 795 shown in FIG. 7A has a cylindrical part 7951 for forming the cooling water passage 95, and the cylindrical part 7951 has a spiral slit part 958A for forming the spiral partition wall 958. Note that the slit part 958A has a radially penetrating form.

The case oil passage 35 extends in the circumferential direction in the axial extending area of the stator core 112. In the present embodiment, as an example, the case oil passage 35 has a spiral form around the central axis I (see FIG. 7B). More specifically, the radial inner side of the case oil passage 35 is partitioned by the boundary wall part 652, the radial outer side of the case oil passage 35 is partitioned by the outside diameter side wall part 653 (an example of an outer wall part), and both axial end parts of the case oil passage 35 are blocked by the end wall parts 660. In an annular space thus formed (an annular space extending in the axial direction over substantially the entire axial length of the supporting case 60) there is disposed a spiral partition wall 359 (an example of a second division wall part). Note that the core 735 shown in FIG. 7B has a cylindrical part 7351 for forming the case oil passage 35, and the cylindrical part 7351 has a spiral slit part 359Afor forming the spiral partition wall 359. In addition, the cylindrical part 7351 has a ring-shaped slit part 357Afor forming a partition wall 357 for dividing the case oil passage 35 in the axial direction (dividing the case oil passage 35 into a first oil passage part 351 and a second oil passage part 352) as will be described later. Note that the slit part 359Aand the slit part 357Ahave a radially penetrating form.

In addition, in the present embodiment, as an example, the case oil passage 35 includes the first oil passage part 351 on one axial side and the second oil passage part 352 on the other axial side. The first oil passage part 351 and the second oil passage part 352 are independent oil passage parts that do not communicate with each other except through a communicating part that communicates with the inlet oil passage 330 which will be described later.

The first oil passage part 351 extends in the circumferential direction on one side (in this example, the X1 side) of the axial extending area of the stator core 112. The first oil passage part 351 has a spiral form around the central axis I (see FIG. 7A), and one end of the first oil passage part 351 communicates with the inlet oil passage 330 and the other end of the first oil passage part 351 opens at oil dripping parts 356.

The second oil passage part 352 extends in the circumferential direction on the other side (in this example, the X2 side) of the axial extending area of the stator core 112. The second oil passage part 352 has a spiral form around the central axis I (see FIG. 7A), and one end of the second oil passage part 352 communicates with the inlet oil passage 330 and the other end of the second oil passage part 352 opens at an oil dripping part 358.

Note that in the present embodiment, as an example, the first oil passage part 351 and the second oil passage part 352 have a symmetrical form in which the first oil passage part 351 and the second oil passage part 352 are separated from each other at a point near the center of the axial extending area of the stator core 112. By this, it becomes easier to uniformly cool the stator core 112 with oil that passes through each of the first oil passage part 351 and the second oil passage part 352, while the case oil passage 35 is separated in the axial direction. Note, however, that in a variant, the first oil passage part 351 and the second oil passage part 352 may have an asymmetrical form with respect to the center of the axial extending area of the stator core 112.

The inlet oil passage 330 communicates with both the first oil passage part 351 and the second oil passage part 352. Note that instead of the inlet oil passage 330, independent inlet oil passages may be provided to the respective first oil passage part 351 and second oil passage part 352. Note, however, that as in the present embodiment, providing the inlet oil passage 330 to the first oil passage part 351 and the second oil passage part 352 in a shared manner is advantageous in terms of a mounting space, compared to a case of providing inlet oil passages separately.

The inlet oil passage 330 includes an axial inlet oil passage part 3301, a first inlet oil passage part 3302 (an example of an oil inlet part), and a second inlet oil passage part 3303 (an example of an oil inlet part).

The axial inlet oil passage part 3301 extends in the axial direction. Specifically, the axial inlet oil passage part 3301 has an opening 33011 (see FIGS. 3 and 4) that opens at an end surface on the X1 side of the supporting case 60. As shown in FIG. 5, the axial inlet oil passage part 3301 extends in the axial direction from the opening 33011 to a point near substantially the center of the axial extending area of the stator core 112. Note that the core 735 shown in FIG. 7B has a solid circular cylindrical part 3301A for forming the axial inlet oil passage part 3301.

The first inlet oil passage part 3302 extends in the radial direction from the axial inlet oil passage part 3301 and is connected to the first oil passage part 351. The first inlet oil passage part 3302 is connected to the first oil passage part 351 more on the X2 side than the oil dripping parts 356. Specifically, the first inlet oil passage part 3302 is formed near substantially the center of the axial extending area of the stator core 112 so as to correspond to the location of an X2-side end part of the axial inlet oil passage part 3301.

The second inlet oil passage part 3303 extends in the radial direction from the axial inlet oil passage part 3301 and is connected to the second oil passage part 352. The second inlet oil passage part 3303 is connected to the second oil passage part 352 more on the X1 side than the oil dripping part 358. Specifically, the second inlet oil passage part 3303 is formed near substantially the center of the axial extending area of the stator core 112 so as to correspond to the location of the X2-side end part of the axial inlet oil passage part 3301. Note that the second inlet oil passage part 3303 is formed more on the X2 side than the first inlet oil passage part 3302. In addition, in the present embodiment, the first oil passage part 351 and the second oil passage part 352 have, as described above, a symmetrical form in which the first oil passage part 351 and the second oil passage part 352 are separated from each other at a point near the center of the axial extending area of the stator core 112, and an axial midpoint location between the first inlet oil passage part 3302 and the second inlet oil passage part 3303 also matches a central location of the axial extending area of the stator core 112. By this, the stator core 112 is easily and uniformly cooled on both axial sides thereof with respect to the central location of the axial extending area of the stator core 112.

As shown in FIG. 5, the oil dripping parts 356 and 358 (an example of a first oil dripping part and a second oil dripping part) are formed at locations in a top region (an example of an upper region) of the supporting case 60 that radially face the coil ends 110 (an example of a specific part). Note that the top region of the supporting case 60 indicates the highest location of the supporting case 60 and a region around the highest location. For example, the top region may be an area on the order of 60 degrees in the circumferential direction with a circumferential location corresponding to the highest location being the center. The oil dripping parts 356 are provided to a coil end 110 on the X1 side in the X-direction, and the oil dripping part 358 is provided to a coil end 110 on the X2 side in the X-direction. Note that each of the oil dripping parts 356 and 358 may be provided in plural number such that the oil dripping parts 356, 358 are spaced apart from each other in the circumferential direction. Note that the core 735 shown in FIG. 7B has three solid circular cylindrical parts 356A for forming the oil dripping parts 356 at three locations which are spaced apart from each other in the circumferential direction.

Now, an outline of flow of cooling water and oil in the above-described heat exchanging and water cooling part 50 will be described.

Cooling water supplied to the inlet water passage 942 (see an arrow R1 of FIG. 4) enters the cooling water passage 95 (see an arrow R2 of FIG. 4), passes through the cooling water passage 95, flows from the X1 side to the X2 side while spirally traveling around the radial outer side of the stator core 112, and exits from the outlet water passage 944 (see an arrow R3 of FIG. 3).

Oil supplied to the inlet oil passage 330 (see an arrow RIO of FIG. 5) is supplied to the first oil passage part 351 and the second oil passage part 352 of the case oil passage 35 in a distributed manner through the first inlet oil passage part 3302 and the second inlet oil passage part 3303 (see arrows R11 and R12 of FIGS. 5 and 6). The oil supplied to the first oil passage part 351 flows toward the X1 side while spirally traveling around, reaches a portion of the top region at an X1-side end part, and drips onto a coil end 110 on the X1 side from the oil dripping parts 356 (see an arrow R13 of FIG. 5). Likewise, the oil supplied to the second oil passage part 352 flows toward the X2 side while spirally traveling around, reaches a portion of the top region at an X2-side end part, and drips onto a coil end 110 on the X2 side from the oil dripping part 358 (see an arrow R14 of FIG. 5).

According to the present embodiment described above, particularly, advantageous effects such as those shown below are provided.

According to the present embodiment, since the supporting case 60 that forms the cooling water passage 95 comes into contact with the stator core 112, only the inside diameter side wall part 651 of the supporting case 60 is present between cooling water and the stator core 112. Here, cooling water is, as described above, cooled by the radiator 92 performing heat exchange with outside air (e.g., air that passes through when the vehicle travels), and oil is cooled by the heat exchanging and water cooling part 50 performing heat exchange with the cooling water, and thus, the cooling water has a lower temperature than the oil. Therefore, compared to a case in which, for example, other media such as oil or other members are interposed between cooling water and the stator core 112, the stator core 112 can be efficiently cooled with cooling water.

In addition, according to the present embodiment, since the supporting case 60 forms the cooling water passage 95 in spiral form, heat can be removed from a wide area of the stator core 112 by cooling water flowing through the cooling water passage 95. Particularly, according to the present embodiment, since, as described above, the cooling water passage 95 extends over the entire axial area of the stator core 112 and extends over the entire circumferential area of the stator core 112 on the radial outer side of the stator core 112, heat can be removed from the entire stator core 112.

In addition, according to the present embodiment, since the cooling water passage 95 and the case oil passage 35 are formed in the supporting case 60, a boundary part between the cooling water passage 95 and the case oil passage 35 can be formed in the supporting case 60. Namely, since the supporting case 60 that forms the cooling water passage 95 forms the case oil passage 35, only the boundary wall part 652 of the supporting case 60 is present between cooling water and oil in the radial direction. Thus, compared to a case in which, for example, other members are interposed between cooling water and oil, the oil can be efficiently cooled with the cooling water. Therefore, according to the present embodiment, even the motor 10 with relatively high output can eliminate the need of an oil cooler.

In addition, according to the present embodiment, since the supporting case 60 forms the case oil passage 35 in spiral form, an area where heat exchange can be performed between oil flowing through the case oil passage 35 and cooling water flowing through the cooling water passage 95 can be efficiently increased. Particularly, according to the present embodiment, since, as described above, the cooling water passage 95 and the case oil passage 35 both extend over the entire axial area of the stator core 112 and extend over the entire circumferential area of the stator core 112 on the radial outer side of the stator core 112, maximization of an area where heat exchange can be performed between oil and cooling water flowing through the cooling water passage 95 can be achieved.

In addition, according to the present embodiment, by the supporting case 60 forming the cooling water passage 95 in spiral form, a direction in which cooling water flows can be controlled, and for example, compared to a case in which cooling water linearly flows from the inlet water passage 942 to the outlet water passage 944, an area where a significant flow velocity occurs without stagnation, etc., (an area where heat exchange is substantially implemented) is increased. As a result, the above-described heat exchange function and stator core water cooling function of the heat exchanging and water cooling part 50 can be enhanced. In addition, cooling water introduced from the inlet water passage 942 flows in the axial direction while spirally going around the radial outer side of the stator core 112 up to the outlet water passage 944, and thus, compared to a case in which cooling water linearly flows from the inlet water passage 942 to the outlet water passage 944, the stator core 112 can be effectively cooled.

In addition, according to the present embodiment, the inlet oil passage 330 is provided in the lowermost region of the supporting case 60. Here, oil introduced into the inlet oil passage 330 is, as described above, introduced into the first oil passage part 351 and the second oil passage part 352, and the oil introduced into the first oil passage part 351 and the oil introduced into the second oil passage part 352 reach the oil dripping parts 356 and 358 in the top region, while flowing from an axial central side to axial outer sides in a spiral path, drip onto the coil ends 110, and are thereby used to cool the coil ends 110. Thus, the amounts of time taken for oil from each of the first oil passage part 351 and the second oil passage part 352 to reach a corresponding one of the oil dripping parts 356 and 358 on the upper side are substantially the same, and thus, the amounts of cooling time (time taken to perform heat exchange with cooling water) during that period of time are substantially the same. In this manner, oil can uniformly flow in the circumferential direction from each of the first oil passage part 351 and the second oil passage part 352 to the oil dripping parts 356 and 358. As a result, uniformalization of cooling capability of oil that is introduced from the first oil passage part 351 and the second oil passage part 352 and reaches the oil dripping parts 356 and 358 can be achieved.

In addition, according to the present embodiment, oil introduced into the inlet oil passage 330 is, as described above, introduced into the first oil passage part 351 and the second oil passage part 352, and the oil introduced into the first oil passage part 351 and the oil introduced into the second oil passage part 352 reach the oil dripping parts 356 and 358 in the top region, while flowing from the axial central side to the axial outer sides in a spiral path, drip onto the coil ends 110, and are thereby used to cool the coil ends 110. The time taken for oil from each of the first oil passage part 351 and the second oil passage part 352 to reach a corresponding one of the oil dripping parts 356 and 358 on the upper side is relatively long. By this, oil that reaches the oil dripping parts 356 and 358 can be cooled with cooling water for a relatively long period of time, and thus, cooling capability for the coil ends 110 using oil can be effectively enhanced.

In addition, according to the present embodiment, as described above, while the supporting case 60 is a single piece member, the supporting case 60 forms therein the cooling water passage 95 and the case oil passage 35, and thus, compared to a configuration in which a supporting case such as the supporting case 60 is formed by joining two or more members together, the number of parts can be reduced and a structure for joining (e.g., a bolt fastening structure) or the like is unnecessary, by which a simple configuration can be implemented.

Meanwhile, in a comparative example in which as in the technique disclosed in the above-described Patent Literature 1, a supporting member that forms a cooling water passage and a supporting member that forms a case oil passage are different pieces, an assembly gap for inserting the supporting member on a radial inner side into the supporting member on a radial outer side is required, which is likely to cause an increase in radial physical size due to the gap. In addition, if an interference fit (shrink fitting, etc.) is adopted to eliminate the assembly gap, then a relatively large thickness (radial thickness) of the supporting member on the radial inner side is required to withstand contraction force (radial contraction force) resulting from the interference fit. As a result, in this case, too, the radial physical size is likely to increase.

On the other hand, according to the present embodiment, as described above, while the supporting case 60 is a single piece member, the supporting case 60 forms therein the cooling water passage 95 and the case oil passage 35, and thus, an inconvenience such as that occurring in the above-described comparative example (an increase in radial physical size) can be prevented.

In addition, in the comparative example such as the technique disclosed in the above-described Patent Literature 1, division wall parts such as the partition walls 359 and 958 can be implemented by radial projection parts, etc., of one or both of the supporting member on the radial inner side and the supporting member on the radial outer side. However, in such a configuration, cooling water or oil that goes over the division wall parts (passes through a gap between a division wall part and the supporting member in the radial direction) can occur. In this case, cooling water or oil does not flow in a desired manner, and as a result, a cooling effect may not be able to be obtained in an intended manner.

In this regard, according to the present embodiment, as described above, while the supporting case 60 is a single piece member, the supporting case 60 forms therein the cooling water passage 95 and the case oil passage 35, and thus, an inconvenience such as that occurring in the above-described comparative example (flow of cooling water or oil that goes over the partition walls 359 and 958) can be prevented. Namely, since the partition walls 359 and 958 are integrally formed with wall parts of passage boundaries (e.g., the inside diameter side wall part 651, the boundary wall part 652, and the outside diameter side wall part 653) in spaces formed in the single piece member, flow of cooling water or oil that goes over the partition walls 359 and 958 can be prevented.

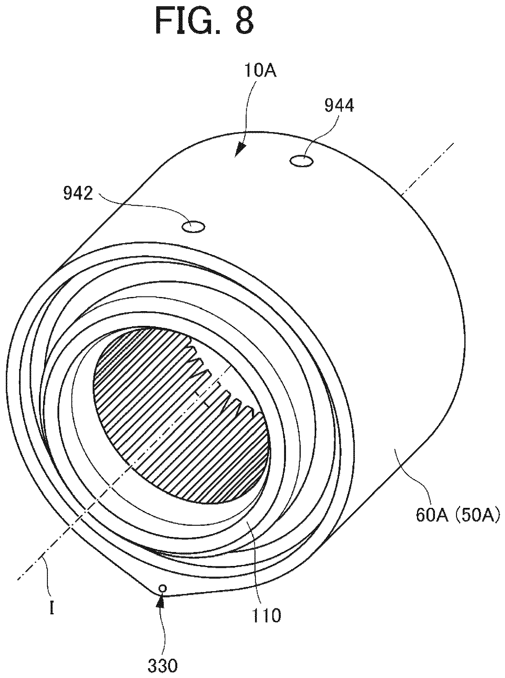

In addition, in the comparative example such as the technique disclosed in the above-described Patent Literature 1, there is a need to provide a sealing structure between the supporting member on the radial inner side and the supporting member on the radial outer side (radial gap) (see reference sign 640a of FIG. 8 of the above-described Patent Literature 1), and an air space is likely to be created between the supporting member on the radial inner side and the supporting member on the radial outer side. As a result, thermal resistance for the supporting member on the radial outer side may increase and an effect of heat transfer to the supporting member on the radial outer side may be reduced.

In this regard, according to the present embodiment, as described above, while the supporting case 60 is a single piece member, the supporting case 60 forms therein the cooling water passage 95 and the case oil passage 35, and thus, an inconvenient such as that occurring in the above-described comparative example (a reduction in heat transfer performance due to an air space, etc.) can be prevented.

Note that in the present embodiment, oil in the case oil passage 35 may always circulate during operation of the motor 10 or may circulate only during a part of a period during which the motor 10 operates. For example, oil in the case oil passage 35 is, as described above, mainly used to cool the coil ends 110, and thus, the oil may circulate only during a period during which heat generation of the coil ends 110 is relatively high.

### [Second Embodiment]

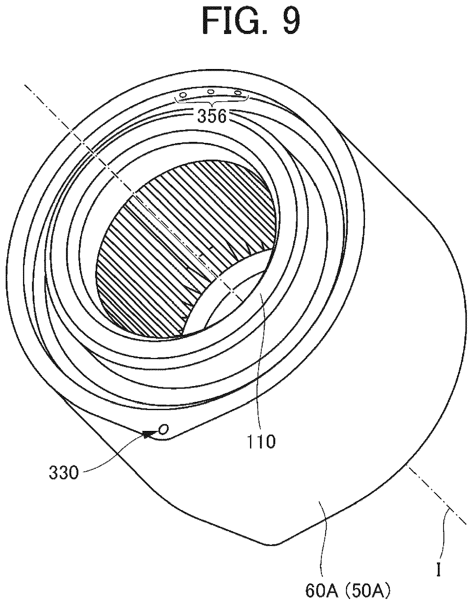

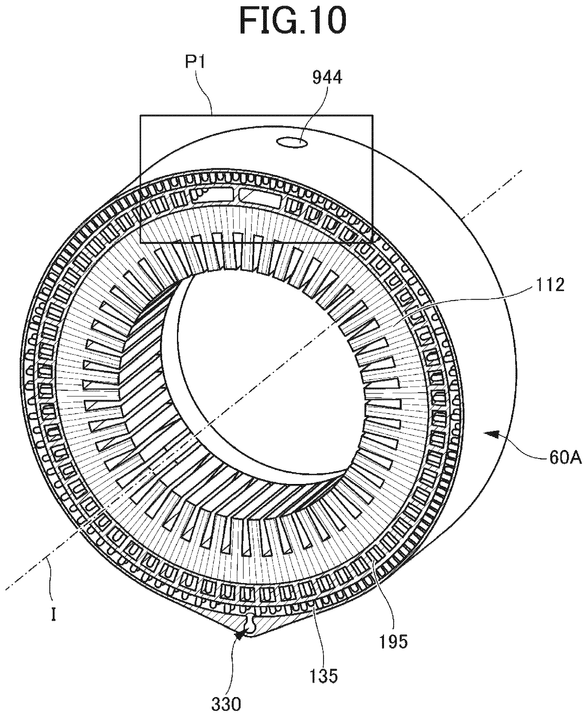

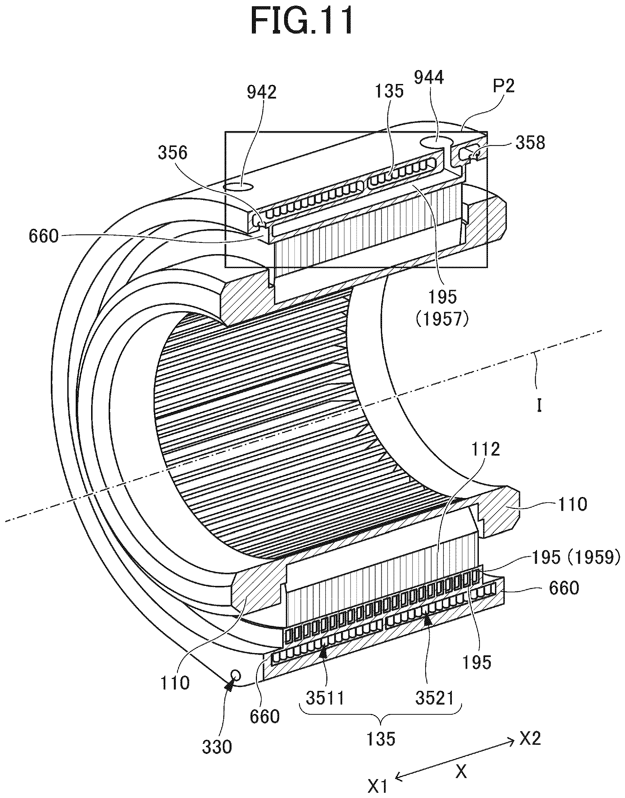

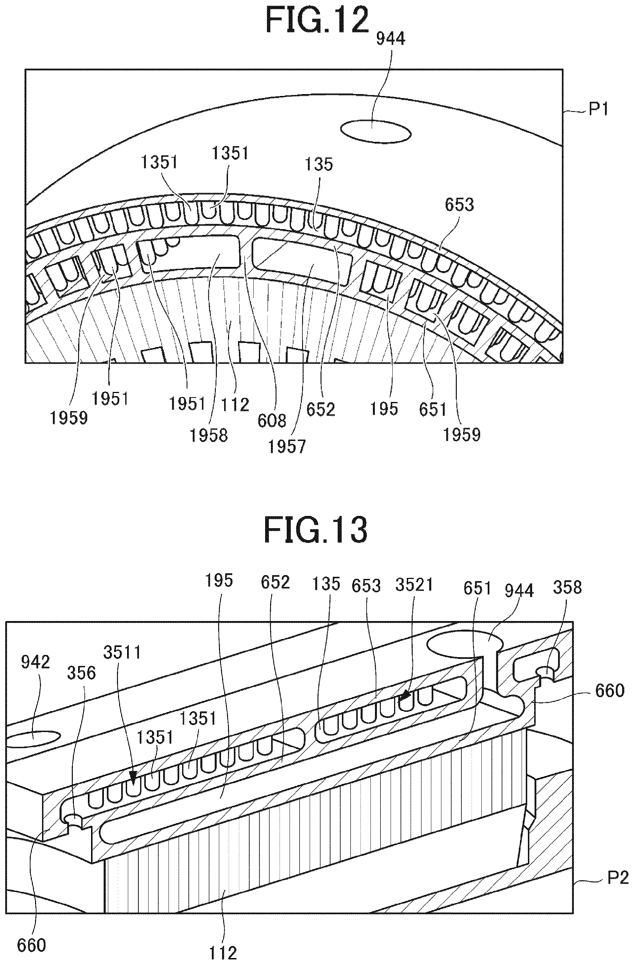

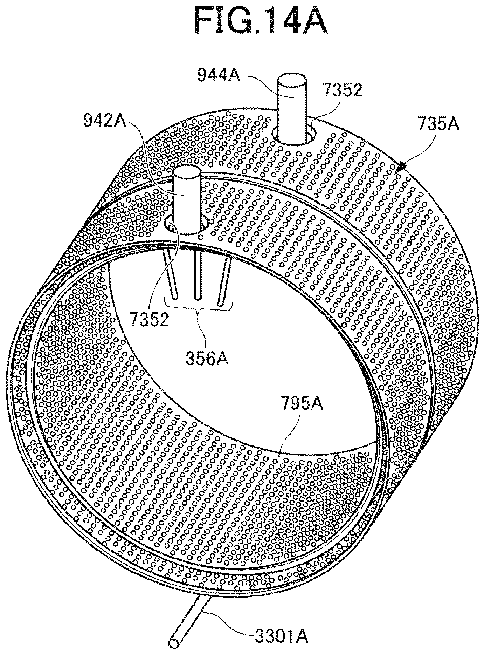

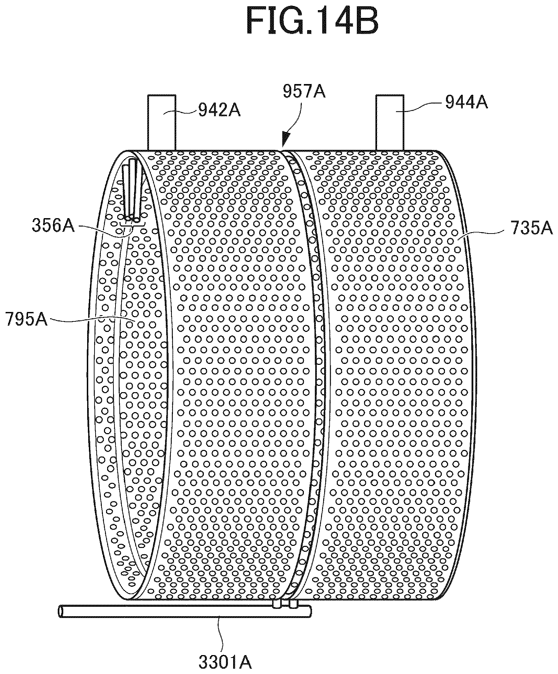

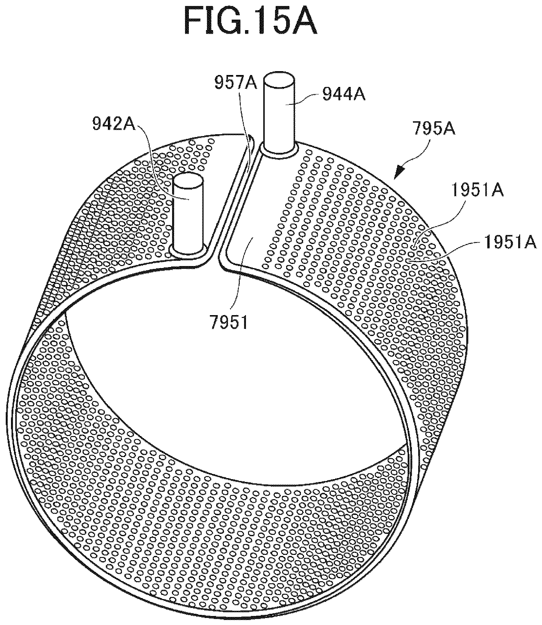

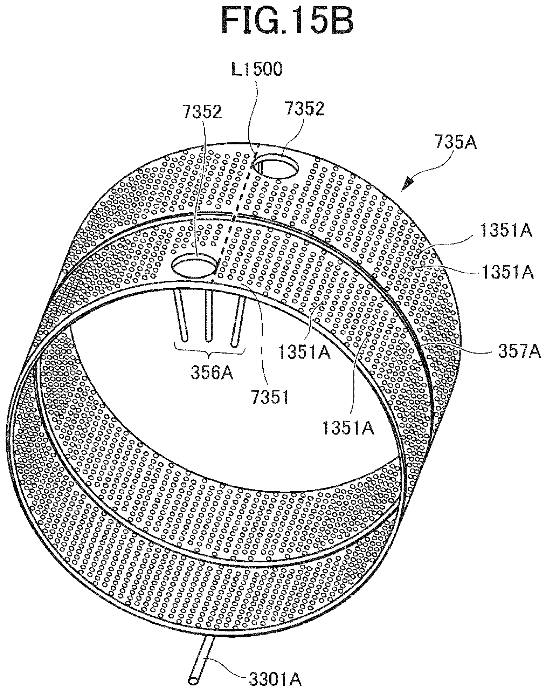

FIG. 8 is a perspective view showing an external appearance of a part of a motor 10A to which a heat exchanging and water cooling part 50A of a second embodiment is applied, FIG. 9 is a perspective view showing an external appearance of a part of the motor 10A as viewed from a different angle from that of FIG. 8, FIG. 10 is a perspective view showing a cross section perpendicular to a central axis I of the motor 10A, and FIG. 11 is a perspective view showing a cross section passing through the central axis I of the motor 10A. In addition, FIG. 12 is an enlarged view of the "P1" portion of FIG. 10, FIG. 13 is an enlarged view of the "P2" portion of FIG. 11, FIGS. 14A to 15B are illustrative diagrams of cores for forming a supporting case 60A, FIGS. 14A and 14B are perspective views showing a core 735A for a cooling water passage 195 and a core 795A as viewed from different angles, FIG. 15A is a perspective view showing the core 795A alone for the cooling water passage 195, and FIG. 15B is a perspective view showing the core 735A alone for a case oil passage 135.

The motor 10A of the present embodiment differs from the motor 10 of the above-described first embodiment in that the supporting case 60 is replaced by the supporting case 60A.

The supporting case 60A differs from the supporting case 60 of the above-described first embodiment in that the case oil passage 35 and the cooling water passage 95 which are formed in the supporting case 60 are replaced by the case oil passage 135 and the cooling water passage 195. In the following, those components, among the components of the supporting case 60A of the present embodiment, that may be substantially the same as components of the supporting case 60 of the above-described first embodiment are given the same reference signs and description thereof may be omitted.

As shown in FIGS. 8 to 11, the supporting case 60A has a cylindrical form and can function as a case of the motor 10A. The supporting case 60A is made of a material with excellent thermal conductivity such as metal. As will be described later, the supporting case 60A is structured to have hollow parts (cavities) that form the case oil passage 135 and the cooling water passage 195. The supporting case 60A having such hollow parts is a single piece member, and may be formed by casting or may be formed using 3D printing technology.

Specifically, the supporting case 60A may be formed using the cores (inserts) 735A and 795A such as those shown in FIGS. 14A to 15B. Here, FIGS. 14A and 14B show, from different angles, a state in which the core 735A for the case oil passage 135 and the core 795A for the cooling water passage 195 are set in a mold (not shown). FIG. 15A schematically shows the core 795A alone for the cooling water passage 195, and FIG. 15B schematically shows the core 735A alone for the case oil passage 135. The supporting case 60Acan be formed (cast) by setting such two cores 735Aand 795A in a mold (not shown) in such a manner that the core 795A is disposed on the radial inner side of the core 73 5A with a gap provided therebetween in the radial direction, and pouring a molten metal material (a material of the supporting case 60A, e.g., an aluminum alloy) into the mold. In this case, the cores 735A and 795A may be, for example, salt cores, and by pouring water onto the "cores 735A and 795A" portions of a casting taken out of the mold, salt is dissolved and removed. As a result, the supporting case 60A can be manufactured in which the "core 735A" portion serves as a space (a space such as the case oil passage 135, etc.), the "core 795A" portion serves as a space (a space such as the cooling water passage 195, etc.), a radial gap between the core 73 5A and the core 795A (an annular gap extending in the axial direction over substantially the entire axial length of the supporting case 60A) serves as a boundary wall part 652, a gap between an outer circumferential surface of the mold and a surface on a radial outer side of the core 735A (an annular gap extending in the axial direction over substantially the entire axial length of the supporting case 60A) serves as an outside diameter side wall part 653, a gap between an inner circumferential surface of the mold and a surface on a radial inner side of the core 795A (an annular gap extending in the axial direction over substantially the entire axial length of the supporting case 60A) serves as an inside diameter side wall part 651, and gaps between the mold and both axial end surfaces of the cores 735A and 795A (annular gaps) serve as end wall parts 660.

The supporting case 60A holds the stator core 112 on a radial inner side thereof in such a manner that the supporting case 60A radially comes into contact with the stator core 112. Namely, the supporting case 60A holds the stator core 112 in such a manner that an inner circumferential surface of the supporting case 60A comes into contact with an outer circumferential surface of the stator core 112. For example, the supporting case 60A is integrated with the stator core 112 by shrink fitting, etc. In this manner, the supporting case 60A unrotatably supports the stator 10b including the stator core 112.

The supporting case 60A preferably holds the stator core 112 in such a manner that the inner circumferential surface of the supporting case 60A comes into contact with substantially the entire outer circumferential surface of the stator core 112 (in such a manner that the supporting case 60A and the stator core 112 come into surface contact with each other). In this case, the entire stator core 112 can be efficiently cooled with cooling water that passes through the cooling water passage 195 in the supporting case 60A. In the present embodiment, as an example, as shown in FIG. 11, the supporting case 60A extends over the entire length in the X-direction of the stator core 112, and the inner circumferential surface of the supporting case 60A comes into contact with substantially the entire outer circumferential surface of the stator core 112.

As described above, the supporting case 60A forms therein the case oil passage 135 and the cooling water passage 195. Upon the formation, the stator core 112, the cooling water passage 195, and the case oil passage 135 are disposed so as to be adjacent to each other in this order from the radial inner side. Note that the term "adjacent" refers to a manner in which any other portion than material portions related to the supporting case 60A is not interposed.

In addition, as in the above-described first embodiment, the supporting case 60A may further form therein an inlet oil passage 330. The inlet oil passage 330 may be substantially the same as that of the above-described first embodiment. Note that the core 735A shown in FIG. 15B has a solid circular cylindrical part 3301Afor forming the inlet oil passage 330.

The cooling water passage 195 is connected to an inlet water passage 942 and an outlet water passage 944. Specifically, the cooling water passage 195 is connected at an end part on an upstream side thereof to the inlet water passage 942, and connected at an end part on a downstream side thereof to the outlet water passage 944. As shown in FIG. 8, the inlet water passage 942 and the outlet water passage 944 may be formed in such a manner that the inlet water passage 942 and the outlet water passage 944 open in a surface on a radial outer side of the supporting case 60A. Note that the core 795A shown in FIG. 15A has circular cylindrical parts 942A and 944A for forming the inlet water passage 942 and the outlet water passage 944.

As shown in FIG. 12, the cooling water passage 195 has axial passage parts 1957 and 1958 which are circumferentially adjacent to each other. The axial passage parts 1957 and 1958 extend in the axial direction over the entire axial width of the supporting case 60A, and both axial ends of the axial passage parts 1957 and 1958 are blocked by the end wall parts 660. In addition, a circumferential portion between the axial passage parts 1957 and 1958 is partitioned by a partition wall part 608 (an example of a second partition wall part) and do not directly communicate with each other. Namely, the axial passage parts 1957 and 1958 communicate with each other only through a circumferential passage part 1959.

The circumferential passage part 1959 extends in the circumferential direction in the axial extending area of the stator core 112. In the present embodiment, as an example, the circumferential passage part 1959 is formed around multiple circular cylindrical parts 1951 (circular cylindrical parts extending in the radial direction) (an example of a first division wall part and a columnar part) (see FIG. 12). More specifically, a radial inner side of the circumferential passage part 1959 is partitioned by the inside diameter side wall part 651, a radial outer side of the circumferential passage part 1959 is partitioned by the boundary wall part 652, and both axial end parts of the circumferential passage part 1959 are blocked by the end wall parts 660. In an annular space thus formed (an annular space extending in the axial direction over substantially the entire axial length of the supporting case 60A) there are disposed multiple circular cylindrical parts 1951 extending in the radial direction from the inside diameter side wall part 651 to the boundary wall part 652. The multiple circular cylindrical parts 1951 may be disposed in the annular space in a distributed and substantially uniform manner. In the cooling water passage 195, one axial end of the axial passage part 1958 is connected to the inlet water passage 942, and the other axial end of the axial passage part 1957 is connected to the outlet water passage 944. Note that the core 795A shown in FIG. 15A has holes 1951A for forming the circular cylindrical parts 1951. In addition, the core 795A has an axial gap part 957A for forming the partition wall part 608 for axially breaking circumferential continuity of the cooling water passage 195 at a top region of the supporting case 60A as will be described later. The gap part 957A has a radially penetrating form. By the cooling water passage 195 having the partition wall part 608 corresponding to the gap part 957A, flow of cooling water that linearly flows from the inlet water passage 942 to the outlet water passage 944 can be prevented. Namely, in order for cooling water introduced from the inlet water passage 942 to reach the outlet water passage 944, the cooling water needs to flow in the axial direction while going around the radial outer side of the stator core 112, and thus, compared to a case in which cooling water linearly flows from the inlet water passage 942 to the outlet water passage 944, the stator core 112 can be effectively cooled.

The case oil passage 135 extends in the circumferential direction in the axial extending area of the stator core 112. In the present embodiment, as an example, the case oil passage 135 is formed around multiple circular cylindrical parts 1351 (circular cylindrical parts extending in the radial direction) (an example of a second division wall part and a columnar part) (see FIGS. 12 and 13). More specifically, a radial inner side of the case oil passage 135 is partitioned by the boundary wall part 652, a radial outer side of the case oil passage 135 is partitioned by the outside diameter side wall part 653, and both axial end parts of the case oil passage 135 are blocked by the end wall parts 660. In an annular space thus formed (an annular space extending in the axial direction over substantially the entire axial length of the supporting case 60A) there are disposed multiple circular cylindrical parts 1351 extending in the radial direction from the boundary wall part 652 to the outside diameter side wall part 653. The multiple circular cylindrical parts 1351 may be disposed in the annular space in a distributed and substantially uniform manner. Note that the core 735A shown in FIG. 15B has holes 1351A for forming the circular cylindrical parts 1351. In addition, the core 735Ahas a ring-shaped slit part 357A for forming a partition wall 357 for dividing the case oil passage 135 in the axial direction (dividing the case oil passage 135 into a first oil passage part 3511 and a second oil passage part 3521) as will be described later. Note that the slit part 357Ahas a radially penetrating form.

In addition, in the present embodiment, as an example, the case oil passage 135 includes the first oil passage part 3511 on one axial side and the second oil passage part 3521 on the other axial side. The first oil passage part 3511 and the second oil passage part 3521 are independent oil passage parts that do not communicate with each other except through a communicating part that communicates with the inlet oil passage 330 which will be described later.

The first oil passage part 3511 extends in the circumferential direction on one side (in this example, the X1 side) of the axial extending area of the stator core 112. One end of the first oil passage part 3511 communicates with the inlet oil passage 330 and the other end of the first oil passage part 3511 opens at oil dripping parts 356 (see FIGS. 9 and 13).

The second oil passage part 3521 extends in the circumferential direction on the other side (in this example, the X2 side) of the axial extending area of the stator core 112. One end of the second oil passage part 3521 communicates with the inlet oil passage 330 and the other end of the second oil passage part 3521 opens at an oil dripping part 358 (see FIG. 13).

Note that in the present embodiment, as an example, the first oil passage part 3511 and the second oil passage part 3521 have a symmetrical form in which the first oil passage part 3511 and the second oil passage part 3521 are separated from each other at a point near the center of the axial extending area of the stator core 112. By this, it becomes easier to uniformly cool the stator core 112 with oil passing through each of the first oil passage part 3511 and the second oil passage part 3521, while the case oil passage 135 is separated in the axial direction. Note, however, that in a variant, the first oil passage part 3511 and the second oil passage part 3521 may have an asymmetrical form with respect to the center of the axial extending area of the stator core 112. In addition, as with the cooling water passage 195, the first oil passage part 3511 and the second oil passage part 3521 each may have a circumferential partition wall part (see a line L1500 of FIG. 15B) formed at a top part thereof.

According to the present embodiment described above, the same advantageous effects as those of the above-described first embodiment can be obtained.

For example, according to the present embodiment, as described above, while the supporting case 60A is a single piece member, the supporting case 60A forms therein the cooling water passage 195 and the case oil passage 135, and thus, an inconvenience such as that occurring in the above-described comparative example (an increase in radial physical size) can be prevented.

In addition, according to the present embodiment, as described above, while the supporting case 60A is a single piece member, the supporting case 60A forms therein the cooling water passage 195 and the case oil passage 135, and thus, an inconvenience such as that occurring in the above-described comparative example (flow of cooling water or oil that goes over both radial end surfaces of the circular cylindrical parts 1951 and 1351) can be prevented. Namely, since the circular cylindrical parts 1951 and 1351 are integrally formed with wall parts of passage boundaries (e.g., the inside diameter side wall part 651, the boundary wall part 652, and the outside diameter side wall part 653) in spaces formed in the single piece member, flow of cooling water or oil that goes over the circular cylindrical parts 1951 and 1351 can be prevented.

In addition, according to the present embodiment, as described above, while the supporting case 60A is a single piece member, the supporting case 60A forms therein the cooling water passage 195 and the case oil passage 135, and thus, an inconvenience such as that occurring in the above-described comparative example (a reduction in heat transfer performance due to an air space, etc.) can be prevented.

In addition, according to the present embodiment, by adjusting the number, density, size, etc., of the circular cylindrical parts 1951, flow of cooling water passing around the circular cylindrical parts 1951 can be easily adjusted in a desired manner. The same can also be said for the circular cylindrical parts 1351. In this case, for example, the circular cylindrical parts 1951 and the circular cylindrical parts 1351 may differ from each other in some or all of the number, density, and size. Such a variant will be described below.

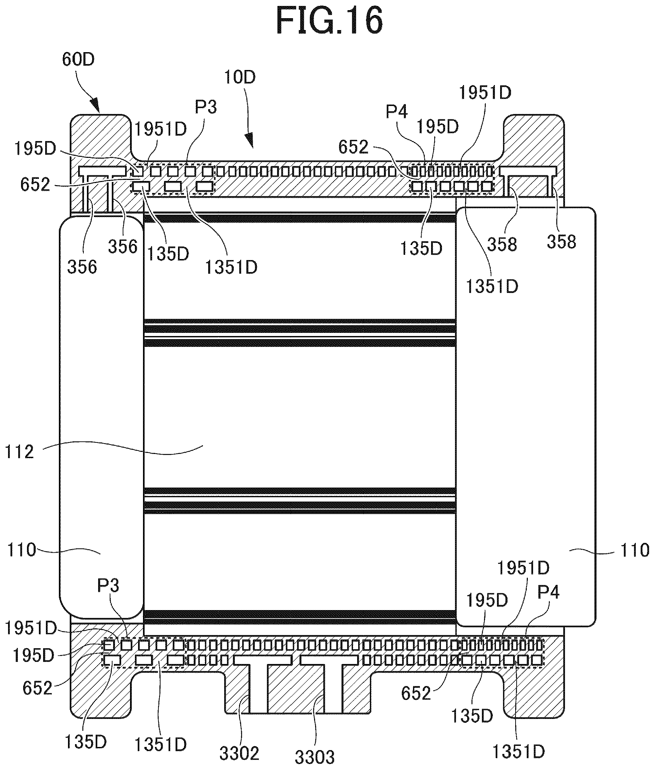

Next, with reference to FIG. 16 and subsequent drawings, a preferred example of disposition, etc., of such circular cylindrical parts 1351 and 1951 will be described.

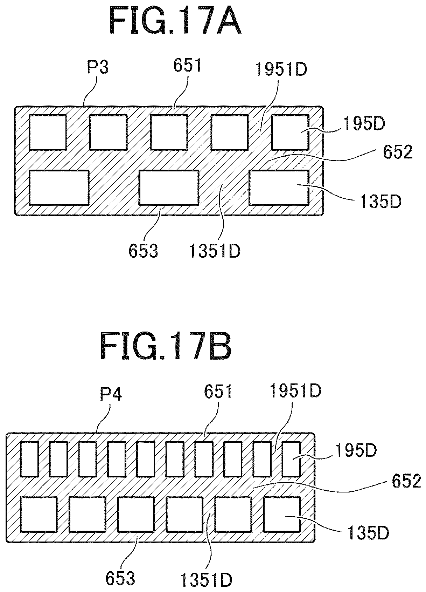

FIG. 16 is a schematic cross-sectional view of a motor 10D for describing a variant. Note that in FIG. 16, those components that may be the same as those of the above-described first and second embodiments are given the same reference signs. Note also that in FIG. 16, only the "supporting case 60D" portion of the motor 10D is shown in cross section. FIG. 17A is a schematic enlarged view of the "P3" portion of FIG. 16 and FIG. 17B is a schematic enlarged view of the "P4" portion of FIG. 16. The "P3" portion of FIG. 16 is a region on an inlet side and the "P4" portion of FIG. 16 is a region on an outlet side. Note that the inlet side and the outlet side for cooling water correspond to respective sides on which the inlet water passage 942 (see FIG. 8) and the outlet water passage 944 (see FIG. 8) are disposed.

In the example shown in FIG. 16, the motor 10D differs from the motor 10A of the above-described second embodiment in that the supporting case 60A is replaced by the supporting case 60D. The supporting case 60D differs from the supporting case 60A of the above-described second embodiment in that the circular cylindrical parts 1351 and the circular cylindrical parts 1951 are replaced by circular cylindrical parts 1351D and circular cylindrical parts 1951D, respectively. The circular cylindrical parts 1351D and the circular cylindrical parts 1951D differ from the circular cylindrical parts 1351 and the circular cylindrical parts 1951 of the above-described second embodiment in disposition, etc.

Specifically, disposition of the circular cylindrical parts 1351D in a case oil passage 135D and disposition of the circular cylindrical parts 1951D in a cooling water passage 195D are the same as those of the above-described second embodiment, but as shown in FIGS. 17A and 17B, the circular cylindrical parts 1351D and the circular cylindrical parts 1951D are disposed at different densities. In the present variant, taking into account the fact that oil has a higher viscosity than cooling water, the circular cylindrical parts 1951D are disposed at a lower density than the circular cylindrical parts 1351D. This enables optimal disposition of the circular cylindrical parts 1351D and 1951D based on characteristics such as the densities of oil and cooling water.

In addition, in the example shown in FIG. 16, as can be seen by comparison of FIGS. 17A and 17B, the disposition density of the circular cylindrical parts 1951D is higher on the outlet side than the inlet side. By this, resistance to flow of cooling water flowing from the inlet water passage 942 (see FIG. 8) to the outlet water passage 944 (see FIG. 8) with the shortest distance increases, and uniformalization of cooling performance of the entire supporting case 60D can be achieved. The same can also be said for the circular cylindrical parts 1351D. Note, however, that in another variant, the disposition density of the circular cylindrical parts 1351D in the case oil passage 135D may be adjusted with reference to flow of oil or the circular cylindrical parts 1351D may be disposed at a uniform density.

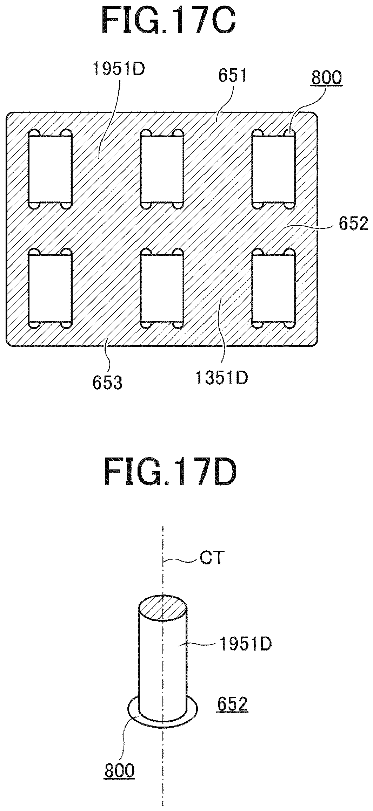

FIG. 17C is a schematic cross-sectional view that describes groove parts 800 at base portions of circular cylindrical parts 1351D and 1951D. FIG. 17D is likewise a diagram for describing a groove part 800 at a base portion of a circular cylindrical part 1951D and is a schematic perspective view of a part of one circular cylindrical part 1951D.

Meanwhile, if such circular cylindrical parts 1951D are disposed at a relatively high density, then a surface area that comes into contact with cooling water (the surface area of the supporting case 60D) increases, and thus, it is effective in terms of being able to enhance cooling performance.

However, the circular cylindrical parts 1951D also function as resistance to flow of cooling water, and thus, pressure loss (loss of pressure) around the circular cylindrical parts 1951D can be problematic. Namely, pressure loss (loss of pressure) is likely to occur when cooling water flows around the circular cylindrical parts 1951D, and flow velocity is likely to decrease (as a result, flow rate is likely to decrease). This can also be said for the circular cylindrical parts 1351D.

In this regard, when the groove parts 800 such as those shown in FIGS. 17C and 17D are provided, such pressure loss can be reduced and thus an inconvenience resulting from a reduction in flow velocity (e.g., a reduction in cooling performance) can be reduced. Note that a reduction in pressure loss brought about by the groove parts 800 can be confirmed by fluid analysis, etc. Note that although in the example shown in FIGS. 17C and 17D, the groove part 800 is formed all around the circular cylindrical part 1951D, the groove part 800 may be formed only in a part of a circumferential area. Note also that although in the example shown in FIGS. 17C and 17D, the groove part 800 is formed in a radially recessed form, instead of this or in addition to this, the groove part 800 may be formed in a form in which the groove part 800 is recessed in a direction intersecting a central axis CT of the circular cylindrical part 1951D (see FIG. 17D). In addition, the groove part 800 may be provided to all circular cylindrical parts 1951D or may be provided only to some of the circular cylindrical parts 1951D.

Note that although here the groove parts 800 provided to the circular cylindrical parts 1951D are mainly described, the same can also be said for groove parts 800 provided to the circular cylindrical parts 1351D. Note also that the groove parts 800 for some of the circular cylindrical parts 1951D and/or the circular cylindrical parts 1351D may be omitted, or the groove parts 800 may be omitted for either one of the circular cylindrical parts 1951D and the circular cylindrical parts 1351D.

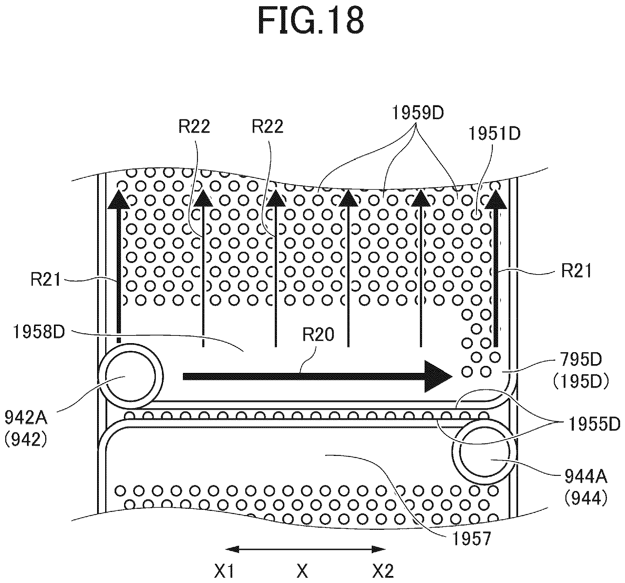

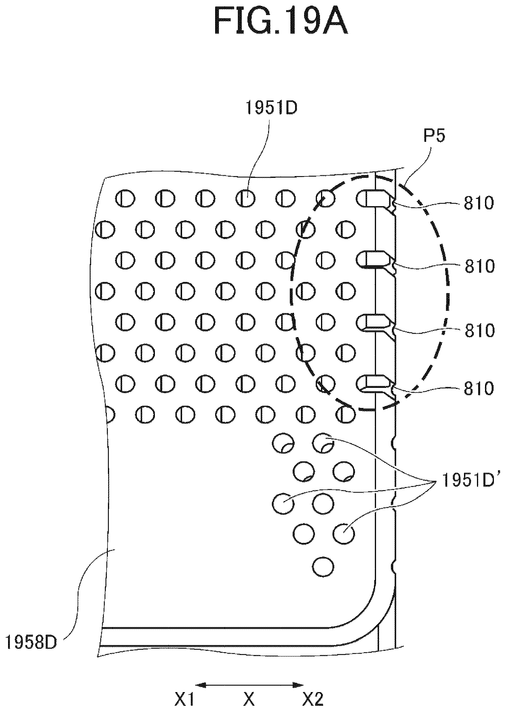

Next, with reference to FIGS. 18 to 19B, a configuration suitable for achieving uniformalization of flow of cooling water in a cooling water passage 195D will be described. Here, the cooling water passage 195D will be described based on a core 795D for forming the cooling water passage 195D. This is because if a configuration of the core 795D is determined, then a configuration of the cooling water passage 195D that can be formed using the core 795D is uniquely determined. In other words, a diagram of the core 795D represents an outer surface (contour) of the cooling water passage 195D. Thus, in the following, a configuration of the core 795D and a configuration of the cooling water passage 195D will be described without particularly distinguishing them from each other.

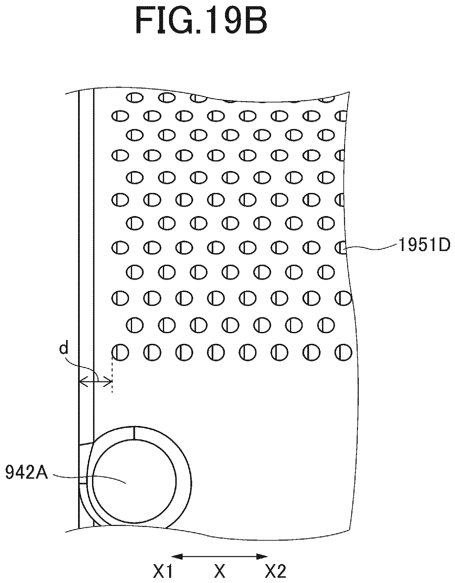

FIG. 18 is a plan view schematically showing a part of the core 795D (cooling water passage 195D). In FIG. 18, flows of cooling water for description are schematically shown by arrows R20, R21, and R22. Note that the thicknesses of the arrows schematically represent flow rate. FIG. 19A is a plan view showing a configuration of a portion of an axial passage part 1958D near an X2-side end part thereof, and FIG. 19B is a plan view showing a configuration of a portion of the axial passage part 1958D near an X1-side end part thereof.

As with the above-described cooling water passage 195, as shown in FIG. 18, the cooling water passage 195D has, when viewed as a whole, a discontinuous cylindrical form in which both circumferential end parts 1955D are separated from each other in the circumferential direction. Namely, a formation area of the cooling water passage 195D has a discontinuous cylindrical form in which both circumferential end parts 1955D are separated from each other in the circumferential direction. A portion between both circumferential end parts 1955D of the cooling water passage 195D is filled (blocked) by a supporting case 60D (see FIGS. 10 and 12). Thus, cooling water introduced from an inlet water passage 942 only flows to one side (see the arrows R21 and R22) in terms of the circumferential direction. By this, cooling water is prevented from flowing from the inlet water passage 942 to an outlet water passage 944 directly (without flowing in the circumferential direction).

In the example shown in FIGS. 18 to 19B, as shown in FIG. 18 (see also FIG. 12), the cooling water passage 195D includes the axial passage part 1958D extending in the axial direction; and circumferential passage parts 1959D that circumferentially communicate with the axial passage part 1958D. Note that the circumferential passage parts 1959D are formed between circular cylindrical parts 1951D. Thus, the circumferential passage parts 1959D can form passages whose number is equal to the number of various combinations of the circular cylindrical parts 1951D. In the following, for description, it is assumed that there are circumferential passage parts 1959D whose number is equal to the number of various combinations, and the circumferential passage parts 1959D differ from each other.

In this case, while cooling water introduced into the inlet water passage 942 flows in the axial direction through the axial passage part 1958D (see the arrow R20), the cooling water flows in the circumferential direction through the circumferential passage parts 1959D via the axial passage part 1958D (see the arrows R21 and R22). Namely, the cooling water flows in such a manner that the cooling water is distributed into the circumferential passage parts 1959D via the axial passage part 1958D. As shown in FIG. 18, the axial passage part 1958D has a relatively wide circumferential width and has a buffering function that stores cooling water on an inlet side. Note that although in the example shown in FIGS. 18 to 19B, the axial passage part 1957 on an outlet water passage 944 side is narrower in circumferential width than the axial passage part 1958D, the axial passage part 1957 and the axial passage part 1958D may have the same circumferential width.

Meanwhile, the core 795D is created by solidifying a degradable material, and holes for the circular cylindrical parts 1951D cannot be made in axial end parts of the core 795D in terms of ensuring the strength of the core 795D, and the core 795D needs to have a certain axial width. Namely, in terms of ensuring the strength of the core 795D, a distance d between an axially outermost (hereinafter, referred to as "axially outermost") circular cylindrical part 1951D and an axial end part of the core 795D has a lower limit. Note that the axial end part of the core 795D determines an edge of an end wall part 660 of the supporting case 60D (see FIG. 11).

If the distance d is relatively long, then the cross-sectional area of an axially outermost circumferential passage part 1959D (the cross-sectional area of the axially outermost circumferential passage part 1959D when cut along a plane passing through the central axis I) becomes larger than the cross-sectional areas of other circumferential passage parts 1959D. Particularly, when the core 795D is a salt core, in terms of strength, a relatively long distance d is likely to be set. In this case, cooling water introduced from the inlet water passage 942 easily flows into the axially outermost circumferential passage part 1959D. As a result, circumferential flow of cooling water passing through the axially outermost circumferential passage parts 1959D (arrow R21) is more promoted than circumferential flow of cooling water passing through other circumferential passage parts 1959D (arrows R22). In this case, an inconvenience can occur that due to a higher flow rate on both axial sides than the flow rate at a central part, uniformalization of cooling capability in the axial direction is inhibited.

In this regard, in the example shown in FIGS. 18 to 19B, in the cooling water passage 195D, a plurality of circular cylindrical parts 1951D are disposed at a higher density at an end part (in the example shown in FIGS. 18 to 19B, an end part on the X2 side) of the axial passage part 1958D than at an axial central part of the axial passage part 1958D. By this, resistance to circumferential flow (arrow R21) of cooling water passing through an axially outermost circumferential passage part 1959D on the X2 side is increased by the circular cylindrical parts 1951D disposed at a relatively high density, and thus, the flow rate of cooling water flowing into the axially outermost circumferential passage part 1959D on the X2 side from the axial passage part 1958D is reduced. Accordingly, the flow rate of cooling water flowing through other circumferential passage parts 1959D (e.g., circumferential passage parts 1959D connected to the axial central part of the axial passage part 1958D) increases, and as a result, uniformalization of cooling capability in the axial direction can be achieved. In the example shown in FIGS. 18 to 19B, additional circular cylindrical parts 1951D (represented as "circular cylindrical parts 1951D'" for distinction) are provided on the X2 side in the axial direction of the axial passage part 1958D. The additional circular cylindrical parts 1951D' are not provided at the axial central part of the axial passage part 1958D. Note that the additional circular cylindrical parts 1951D' may have the same form as other circular cylindrical parts 1951D or may have a different form than other circular cylindrical parts 1951D. Note also that the additional circular cylindrical parts 1951D' may also be provided at an axial end part on the X1 side of the axial passage part 1958D.

In addition, in the example shown in FIGS. 18 to 19B, the cooling water passage 195D has a recessed part 810 that is recessed toward an axial inner side (see inside P5 of FIG. 19A), on the X2 side in the axial direction thereof (a side far from the inlet water passage 942) and at a circumferential location on a downstream side of the axial passage part 1958D (here, a circumferential location within an area circumferentially adjacent to the axial passage part 1958D). In other words, an end wall part 660 (not shown in FIGS. 18 to 19B; see FIG. 11) has a protrusion part (not shown) that protrudes toward an axial inner side, on the X2 side in the axial direction thereof and at a circumferential location on the downstream side of the axial passage part 1958D. Note that in this case, the recessed parts 810 may have a radially penetrating form as with holes for the circular cylindrical parts 1951D or may not penetrate. By this, resistance to circumferential flow (arrow R21) of cooling water passing through an axially outermost circumferential passage part 1959D on the X2 side is increased by the recessed parts 810, and thus, the flow rate of cooling water flowing into the axially outermost circumferential passage part 1959D on the X2 side from the axial passage part 1958D is reduced. Accordingly, the flow rate of cooling water flowing through other circumferential passage parts 1959D increases, and as a result, uniformalization of cooling capability in the axial direction can be achieved. Note that the recessed parts 810 may be provided on an axial end part on the X1 side of the axial passage part 1958D.

In the example shown in FIGS. 18 to 19B, a circumferential location where a recessed part 810 is formed is set between a plurality of circular cylindrical parts 1951D located farthest to the X2 side in the axial direction. By this, by cooperation between the recessed part 810 and the plurality of circular cylindrical parts 1951D (circular cylindrical parts 1951D located farthest to the X2 side in the axial direction), the flow rate of cooling water passing through the axially outermost circumferential passage part 1959D on the X2 side can be appropriately reduced. Note, however, that in another variant, a circumferential location where a recessed part 810 is formed may be set at a location other than a location between a plurality of circular cylindrical parts 1951D located farthest to the X2 side in the axial direction (e.g., a location that overlaps a circular cylindrical part 1951D as viewed in the radial direction).

Note that although in the example shown in FIGS. 18 to 19B, the recessed parts 810 are provided at only a part of a circumferential area (only near the axial passage part 1958D), the recessed parts 810 may be provided in a longer circumferential area (e.g., over the entire circumference).

In addition, although in the example shown in FIGS. 18 to 19B, both of the additional circular cylindrical parts 1951D' and the recessed parts 810 are provided, only either one may be provided.

Although each embodiment is described in detail above, the present disclosure is not limited to specific embodiments, and various modifications and changes that fall within the scope recited in the claims can be made. In addition, it is also possible to combine together all or a plurality of components of the above-described embodiments. In addition, an advantageous effect related to a dependent claim among the advantageous effects of the embodiments is an additional advantageous effect distinguished from a superordinate concept (independent claim).

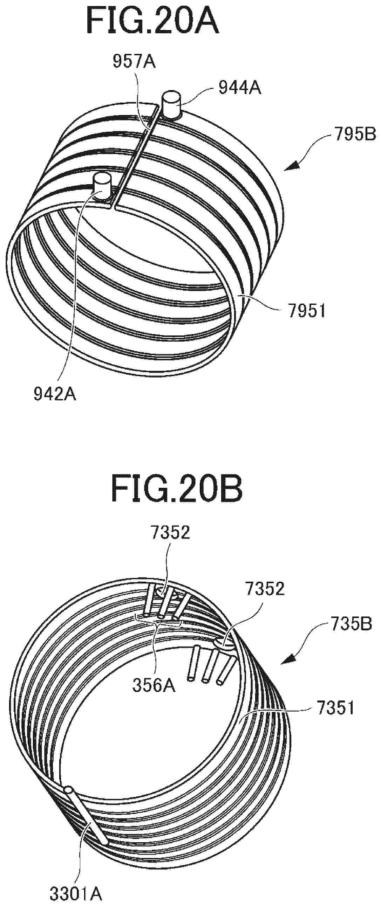

For example, although in the above-described first and second embodiments (the same can also be said for various variants, too; hereinafter the same), the cooling water passages 95 and 195 in specific forms and the case oil passages 35 and 135 in specific forms are used, cooling water passages and case oil passages formed in the supporting cases 60 and 60A may use any form. For example, a combination of the cooling water passage 95 and the case oil passage 135 may be used or a combination of the cooling water passage 195 and the case oil passage 35 may be used. In addition, instead of the cooling water passage 95 in spiral form, a cooling water passage in annular form may be used. Such a cooling water passage in annular form may be formed using, for example, a core 795B such as that shown in FIG. 20A. When the core 795B shown in FIG. 20A is used, a cooling water passage in annular form has a plurality of annular cooling water passage parts in such a manner that the annular cooling water passage parts are adjacent to each other in the axial direction, and the plurality of annular cooling water passage parts may axially communicate with each other at an appropriate circumferential location. Likewise, instead of the case oil passage 35 in spiral form, a case oil passage in annular form may be used. Such a case oil passage in annular form may be formed using, for example, a core 735B such as that shown in FIG. 20B. Likewise, when the core 735B such as that shown in FIG. 20B is used, a case oil passage in annular form has a plurality of annular case oil passage parts in such a manner that the annular case oil passage parts are adjacent to each other in the axial direction, and the plurality of annular case oil passage parts may axially communicate with each other at an appropriate circumferential location. In this case, too, as in the above-described first and second embodiments, a case oil passage may be axially divided into two passages.

In addition, although in the above-described first embodiment (the same can also be said for the second embodiment), the supporting case 60 is formed of a single piece member, a supporting case such as the supporting case 60 may be formed by joining two or more members together. In this case, the supporting case 60 may be formed of a plurality of axially divided pieces. In this case, too, each piece is formed in such a manner that a cooling water passage corresponding to the cooling water passage 95 and a case oil passage corresponding to the case oil passage 35 are adjacent to each other from the radial inner side. Alternatively, the supporting case 60 may be formed of a plurality of radially divided pieces. In this case, a piece on a radial inner side may form therein a cooling water passage corresponding to the cooling water passage 95, and a piece on a radial outer side may form therein a case oil passage corresponding to the case oil passage 35. Alternatively, in this case, a case oil passage corresponding to the case oil passage 35 may be formed between the piece on the radial inner side and the piece on the radial outer side.

In addition, although in the above-described first embodiment (the same can also be said for the second embodiment), the supporting case 60 is formed in such a manner that the cooling water passage 95 and the case oil passage 35 are adjacent to each other from the radial inner side, the configuration is not limited thereto. For example, the supporting case 60 may be formed in such a manner that the case oil passage 35 and the cooling water passage 95 are adjacent to each other from the radial inner side. Alternatively, the supporting case 60 may form only either one of the case oil passage 35 and the cooling water passage 95. For example, the supporting case 60 may be a single piece member that forms the cooling water passage 95. In this case, the boundary wall part 652 forms a wall part on a radial outer side (outer wall part) of the one piece member that forms the cooling water passage 95. In this case, a structure of an oil passage may be independently and separately implemented in such a manner that the oil passage can perform heat exchange with cooling water passing through the cooling water passage 95 or in such a manner that the oil passage does not perform heat exchange.

### [Summary of the present embodiment]

The present embodiment has at least the following configuration. A stator cooling structure (402) includes a supporting member (60, 60A) that is a single piece member having a cylindrical form going in an axial direction (X) of a rotating electrical machine (10) and that supports a stator core (112) of a rotating electrical machine and forms a passage (95, 195, 35, 135) through which fluid for cooling passes, and
the supporting member has:
an inner wall part (651) that supports an outer circumferential surface of the stator core and has a cylindrical form;
an outer wall part (653) that faces a radial outer side of the inner wall part and has a cylindrical form; and
one or more division wall parts (359, 958, 1951, 1351) that extend in a radial direction between the inner wall part and the outer wall part and divide the passage formed between the inner wall part and the outer wall part.

According to the present embodiment, since the supporting member that supports the stator core forms therein a passage through which fluid for cooling passes, the stator core can be effectively cooled with fluid passing through the passage. In addition, since flow of fluid can be controlled in a desired manner by the division wall parts, it becomes easier to uniformly cool the entire stator core. In addition, since the division wall parts extend in the radial direction between the inner wall part and outer wall part of the supporting member which is a single piece member, it is possible to minimize a gap between a radial end surface of a division wall part and the inner wall part or the outer wall part (for example, it is possible to allow the radial end surface and the inner wall part or the outer wall part to integrally continue), and thus, a possibility that fluid goes over the radial end surface of the division wall part and flows can be reduced. As a result, a possibility of a reduction in cooling performance due to flow of fluid going over the division wall parts can be reduced. In addition, when a similar passage structure is implemented by allowing two or more pieces to be adjacent to each other on radial inner and outer sides, not only the above-described inconvenience about occurrence of flow of fluid going over the division wall parts, but also an inconvenience about the likelihood of an increase in the overall radial physical size of the two or more pieces occurs. This is because in a structure in which two or more pieces are adjacent to each other on radial inner and outer sides, in terms of, for example, keeping a radial gap (assembly gap) or ensuring strength against contraction force upon interference fit (shrink fitting, etc.), the radial physical size is likely to increase. In this regard, according to a passage structure using a single piece supporting member, such a radial gap or contraction force cannot occur, and thus, a reduction in radial physical size can be achieved. In addition, when a similar passage structure is implemented by allowing two or more pieces to be adjacent to each other on radial inner and outer sides, due to an air space created or provided between the pieces (e.g., an air space between an end surface of a division wall part and a piece facing the end surface) or due to a sealing structure, heat transfer to a piece on the radially farthest side from the stator core is likely to become inefficient. In this regard, according to the present embodiment, such an inconvenience can be prevented.

The term "single piece" used here refers to a form in which separation into two or more parts is substantially impossible, and includes parts that are integrated in a mold, but does not include parts that are integrated using fixtures such as bolts, or parts that are integrated by shrink fitting or a press fit.

In addition, the "division" is, for example, local division and a passage may be divided in such a manner that the divided passages communicate with each other at a point in the circumferential direction.

In addition, in the present embodiment, it is preferred that the one or more division wall parts continue with the inner wall part on a radial inner side and continue with the outer wall part on a radial outer side.

In this case, on both radial sides of the division wall part, fluid can be securely prevented from going over, and thermal conductivity between the inner wall part and the outer wall part with the division wall part therebetween can be enhanced.

In addition, in the present embodiment, it is preferred that
the supporting member have, on both axial sides of the supporting member, end wall parts that extend in a radial direction and have an annular form as viewed in an axial direction, and
the end wall parts block both axial sides of the passage

In this case, a passage whose both axial sides and both radial sides are blocked by a single piece supporting member can be formed.

In addition, in the present embodiment, it is preferred that
the supporting member have a first partition wall part (652) that radially partitions between the inner wall part and the outer wall part,
the passage include a cooling water passage (95, 195) which is radially formed between the inner wall part and the first partition wall part and through which cooling water passes; and an oil passage (35, 135) which is radially formed between the outer wall part and the first partition wall part and through which oil passes, and
the one or more division wall parts include one or more first division wall parts that are radially provided between the inner wall part and the first partition wall part and divide the cooling water passage; and one or more second division wall parts that are radially provided between the outer wall part and the first partition wall part and divide the oil passage

In this case, a rotor core can be cooled with both oil and cooling water. In addition, by the supporting member having the first partition wall part, the cooling water passage and the oil passage can be disposed so as to be radially adjacent to each other, without radial physical size becoming excessively large. In addition, since the cooling water passage and the oil passage can be disposed so as to be radially adjacent to each other with the first partition wall part therebetween, heat exchange can be efficiently achieved, and as a result, cooling performance can be enhanced. In addition, since the first partition wall part is shared by the cooling water passage and the oil passage, radial physical size can be efficiently reduced.

In addition, in the present embodiment, it is preferred that the stator core, the cooling water passage, and the oil passage be disposed so as to be adjacent to each other in this order from a radial inner side

In this case, since the cooling water passage is adjacent to the stator core, the stator core can be directly cooled with cooling water (cooling water passing through the cooling water passage). By this, compared to a case in which other media (e.g., oil) are interposed between the stator core and the cooling water, the stator core can be efficiently cooled. In addition, since the cooling water passage is adjacent to the oil passage, oil in the oil passage can be directly cooled with cooling water in the cooling water passage. By this, the efficiency of heat exchange between oil in the oil passage and cooling water passing through the cooling water passage can be enhanced. In addition, since a cooling water passage and an oil passage such as those described above are formed in the supporting member which is a single piece member, compared to a case in which a similar cooling water passage and oil passage are formed by combining two or more pieces of members together, the number of parts can be reduced and a structure for coupling the members together is unnecessary.

In addition, in the present embodiment, it is preferred that
the stator cooling structure further include an oil circulating part (400) that allows the oil to circulate through the oil passage, and
the oil circulated by the oil circulating part be supplied to a specific part (110) of a rotating electrical machine

In this case, while oil circulates through the oil passage, in the oil passage, the oil can be cooled (heat exchange) with cooling water in the cooling water passage. Namely, heat exchange is achieved between cooling water in the cooling water passage and oil in the oil passage while the oil circulates. Thus, a specific part (e.g., a coil end) of the rotating electrical machine can be cooled using oil in the oil passage.

In addition, in the present embodiment, it is preferred that
the stator cooling structure further include a cooling water circulating part (401) that allows the cooling water to circulate through the cooling water passage,
the cooling water circulating part include a heat exchanging part (92) that removes heat from the cooling water, and
the oil circulating part not include an oil cooler

In this case, cooling water cooled by the heat exchanging part can be circulated. As a result, heat exchange between cooling water and oil is promoted, and while the oil circulates, in the oil passage, the oil can be cooled (heat exchange) with the cooling water in the cooling water passage. Thus, in this case, while a reduction in cost and the like are achieved by eliminating an oil cooler, required oil cooling performance can be ensured.

In addition, in the present embodiment, it is preferred that the cooling water passage and the oil passage extend in a circumferential direction in an axial extending area of the stator core

In this case, the cooling water passage extends in the circumferential direction so as to be adjacent to the stator core. By this, while the stator core is effectively and circumferentially cooled by the cooling water passage, oil in the oil passage can be effectively and circumferentially cooled by the cooling water passage.

In addition, in the present embodiment, it is preferred that
the supporting member support the stator core in such a manner that an outer circumferential surface of the stator core comes into surface contact with an inner circumferential surface of the supporting member, and
the stator core and the cooling water be able to perform heat exchange through the inner circumferential surface, and the cooling water and the oil be able to perform heat exchange through the first partition wall part

In this case, oil in the oil passage can be effectively cooled with cooling water in the cooling water passage through boundary surfaces on both radial sides of the first partition wall part, and the stator core can be effectively cooled with cooling water in the cooling water passage through the inner circumferential surface of the supporting member.

In addition, in the present embodiment, it is preferred that
the supporting member have an oil dripping part (356, 358) that allows the oil to drip onto a coil end (110) of a rotating electrical machine, in an upper region on an upper side than a center in an up-down direction of the supporting member in a mounted state,
the oil passage communicate with the oil dripping part, and
an oil inlet part (3302, 3303) for introducing the oil into the oil passage be provided in a lower region on a lower side than the center of the supporting member in a mounted state

In this case, oil in the oil passage can be cooled with cooling water in the cooling water passage from the lower region. In addition, the coil end can be cooled by allowing an oil to drip from the oil dripping part which is formed using the supporting member. In addition, the dripping oil is oil in the oil passage that is introduced from the oil inlet part in the lower region and is oil cooled by the cooling water passage, and thus, the coil end can be efficiently cooled.

In addition, in the present embodiment, it is preferred that the oil passage include a first oil passage part (351, 3511) on one axial side and a second oil passage part (352, 3521) on the other axial side

In this case, since the first oil passage part and the second oil passage part each can cool in the same manner, uniformalization of cooling capability in the axial direction can be achieved.

In addition, in the present embodiment, it is preferred that the supporting member further form an inlet oil passage (330) that communicates with the first oil passage part and the second oil passage part

In this case, by the first oil passage part and the second oil passage part, one axial side and the other axial side of the stator core can be cooled independently of each other.

In addition, in the present embodiment, it is preferred that the inlet oil passage include an axial inlet oil passage part (3301) that extends in an axial direction; a first inlet oil passage part (3302) that extends in a radial direction from the axial inlet oil passage part and is connected to the first oil passage part; and a second inlet oil passage part (3303) that extends in a radial direction from the axial inlet oil passage part and is connected to the second oil passage part

In this case, oil can be supplied from one inlet oil passage to the first oil passage part and the second oil passage part in a distributed manner, and thus, an efficient inlet oil passage structure can be implemented.

In addition, in the present embodiment, it is preferred that
the supporting member have an oil dripping part (356, 358) that allows the oil to drip onto a coil end (110) of a rotating electrical machine, in an upper region on an upper side than a center in an up-down direction of the supporting member in a mounted state,
the oil passage communicate with the oil dripping part, and
the inlet oil passage be provided in a lower region on a lower side than the center of the supporting member in a mounted state

In this case, oil can be allowed to be introduced from the lower region and drip from the oil dripping part in the upper region. By this, compared to a case in which oil is introduced from the upper region and drips from an oil dripping part in the upper region, an oil path from the inlet oil passage to the oil dripping part can be easily increased, and thus, oil cooling time with the use of cooling water can be easily and efficiently increased. As a result, oil cooling efficiency can be efficiently enhanced.

In addition, in the present embodiment, it is preferred that
the oil dripping part have a first oil dripping part (356) on one axial side and a second oil dripping part (358) on the other axial side, and
the first oil passage part communicate with the first oil dripping part and the second oil passage part communicate with the second oil dripping part

In this case, coil ends on both axial sides can be cooled with oil through the first oil passage part and the second oil passage part.

In addition, in the present embodiment, it is preferred that
the first inlet oil passage part be connected to the first oil passage part more on the other axial side than the first oil dripping part, and
the second inlet oil passage part be connected to the second oil passage part more on one axial side than the second oil dripping part and more on the other axial side than the first inlet oil passage part

In this case, since oil can be introduced into the first oil passage part through the first inlet oil passage part from more other axial side than the first oil dripping part, in the first oil passage part, oil flows not only in the circumferential direction but also in the axial direction before reaching the first oil dripping part, and thus, the rotor core can be efficiently cooled. Likewise, since oil can be introduced into the second oil passage part through the second inlet oil passage part from more one axial side than the second oil dripping part, in the second oil passage part, oil flows not only in the circumferential direction but also in the axial direction before reaching the second oil dripping part, and thus, the rotor core can be efficiently cooled.

In addition, in the present embodiment, it is preferred that
the first oil passage part communicate with an area from the first inlet oil passage part to the first oil dripping part, more on one axial side than a midpoint location in an axial direction between the first inlet oil passage part and the second inlet oil passage part, and
the second oil passage part communicate with an area from the second inlet oil passage part to the second oil dripping part, more on the other axial side than the midpoint location

In this case, in the first oil passage part more on one side than the midpoint location, a portion on one side of the rotor core can be efficiently cooled with oil flowing in the axial direction and in the radial direction before reaching the first oil dripping part, and in the second oil passage part more on the other side than the midpoint location, a portion on the other side of the rotor core can be efficiently cooled with oil flowing in the axial direction and in the radial direction before reaching the second oil dripping part. In addition, by setting the midpoint location near the center in the axial direction of the rotor core, uniformalization of cooling capability of oil for the rotor core in the axial direction can be achieved.

In addition, in the present embodiment, it is preferred that
the one or more division wall parts include a plurality of columnar parts, and
the plurality of columnar parts for the cooling water passage and the plurality of columnar parts for the oil passage be disposed at different densities

In this case, taking into account a difference in characteristic (e.g., a difference in viscosity) between oil and cooling water, etc., densities for disposition of columnar parts can be adjusted independently of each other so that a desired flow of each of the oil and cooling water is achieved.

In addition, in the present embodiment, it is preferred that the plurality of columnar parts for the cooling water passage be disposed at a higher density than the plurality of columnar parts for the oil passage

In this case, while flow of oil with relatively high viscosity is promoted, the surface area of the cooling water passage and cooling capability associated therewith can be efficiently increased.

In addition, in the present embodiment, it is preferred that
a groove part (800) be provided at a connecting portion between at least one columnar part among the plurality of columnar parts for the cooling water passage and the plurality of columnar parts for the oil passage and at least any one of the inner wall part, the outer wall part, and the first partition wall part

In this case, pressure loss (flow resistance) at an axial end part of the columnar part can be reduced.

In addition, in the present embodiment, it is preferred that
a formation area of the passage have a discontinuous cylindrical form in which both circumferential end parts of the formation area are separated from each other in a circumferential direction, and
the supporting member have a second partition wall part that blocks a portion between the both circumferential end parts

In this case, circumferential flow of fluid can be controlled only to one direction, and uniform cooling in the circumferential direction can be achieved.

In addition, in the present embodiment, it is preferred that
the one or more division wall parts include a plurality of columnar parts,
the supporting member form:
   an axial passage part that is adjacent to the second partition wall part from at least one circumferential side and extends in an axial direction; and
   a circumferential passage part that circumferentially communicates with the axial passage part, between the end wall parts on both axial sides, and
   the plurality of columnar parts be disposed at a higher density at an end part of the axial passage part than at an axial central part of the axial passage part

In this case, even when a passage portion with relatively low resistance is formed so as to be adjacent to an end wall part in terms of the strength of a core, the flow rate of fluid flowing through the passage portion is reduced, enabling uniformalization of flows at respective locations in the axial direction.

In addition, in the present embodiment, it is preferred that one of the end wall parts form a recessed part (810) that is recessed toward an axial inner side, at a circumferential location, on a downstream side of the axial passage part, of the circumferential passage part.

In this case, the flow rate of fluid flowing through a passage portion adjacent to an end wall part is reduced, enabling uniformalization of flows at respective locations in the axial direction. Note that the circumferential location on the downstream side of the axial passage part may be within an area adjacent to the axial passage part.

In addition, in another aspect, the present embodiment has at least the following configuration. In a stator cooling structure, a stator core (112), a cooling water passage (95, 195), and an oil passage (35, 135) are adjacent to each other in this order from a radial inner side, and
both of the cooling water passage and the oil passage are formed of a single piece member (60, 60A) and extend in a circumferential direction in an axial extending area of the stator core.

According to the present embodiment, since the cooling water passage is adjacent to the stator core, the stator core can be directly cooled with cooling water (cooling water passing through the cooling water passage). By this, compared to a case in which other media (e.g., oil) are interposed between the stator core and the cooling water, the stator core can be efficiently cooled. In addition, since the cooling water passage is adjacent to the oil passage, oil in the oil passage can be directly cooled with cooling water in the cooling water passage. By this, the efficiency of heat exchange between oil in the oil passage and cooling water passing through the cooling water passage can be enhanced. In addition, since the cooling water passage and the oil passage extend in the circumferential direction in the axial extending area of the stator core, while the stator core is effectively cooled in the circumferential direction by the cooling water passage, oil in the oil passage can be effectively cooled in the circumferential direction by the cooling water passage. In addition, since a cooling water passage and an oil passage such as those described above are formed in a single piece member, compared to a case in which a similar cooling water passage and oil passage are formed by combining two or more pieces of members together, the number of parts can be reduced and a structure for coupling the members together is unnecessary.

### REFERENCE SIGNS LIST

10: Motor (rotating electrical machine), 92: Radiator (heat exchanging part), 110: Coil end (specific part), 35, 135: Case oil passage (passage), 351, 3511: First oil passage part, 352, 3521: Second oil passage part, 356: Oil dripping part (first oil dripping part), 358: Oil dripping part (second oil dripping part), 359: Partition wall (division wall part), 3301: Axial inlet oil passage part, 3302: First inlet oil passage part, 3303: Second inlet oil passage part, 60, 60A: Supporting case (supporting member, a single piece member), 651: Inside diameter side wall part (inner wall part), 652: Boundary wall part (first partition wall part), 653: Outside diameter side wall part (outer wall part), 800: Groove part, 810: Recessed part, 95, 195: Cooling water passage (passage), 958: Partition wall (division wall part), 112: Stator core, 400: Oil circulating part, 402: Stator cooling structure, 1951: Circular cylindrical part (division wall part), and 1351: Circular Cylindrical part (division wall part)

## Claims

1. A stator cooling structure comprising a supporting member that supports a stator core of a rotating electrical machine and forms a passage through which fluid for cooling passes, the supporting member being a single piece member having a cylindrical form going in an axial direction of a rotating electrical machine,
wherein
the supporting member has:
an inner wall part that supports an outer circumferential surface of the stator core and has a cylindrical form;
an outer wall part that faces a radial outer side of the inner wall part and has a cylindrical form; and
one or more division wall parts that extend in a radial direction between the inner wall part and the outer wall part and divide the passage formed between the inner wall part and the outer wall part.

2. The stator cooling structure according to claim 1, wherein the one or more division wall parts continue with the inner wall part on a radial inner side and continue with the outer wall part on a radial outer side.

3. The stator cooling structure according to claim 1 or 2, wherein
the supporting member has, on both axial sides of the supporting member, end wall parts that extend in a radial direction and have an annular form as viewed in an axial direction, and
the end wall parts block both axial sides of the passage.

4. The stator cooling structure according to claim 3, wherein
the supporting member has a first partition wall part that radially partitions between the inner wall part and the outer wall part,
the passage includes a cooling water passage through which cooling water passes, the cooling water passage being radially formed between the inner wall part and the first partition wall part; and an oil passage through which oil passes, the oil passage being radially formed between the outer wall part and the first partition wall part, and
the one or more division wall parts include one or more first division wall parts that are radially provided between the inner wall part and the first partition wall part and divide the cooling water passage; and one or more second division wall parts that are radially provided between the outer wall part and the first partition wall part and divide the oil passage.

5. The stator cooling structure according to claim 4, wherein the stator core, the cooling water passage, and the oil passage are disposed so as to be adjacent to each other in this order from a radial inner side.

6. The stator cooling structure according to claim 5, further comprising an oil circulating part that allows the oil to circulate through the oil passage,
wherein
the oil circulated by the oil circulating part is supplied to a specific part of a rotating electrical machine.

7. The stator cooling structure according to claim 6, further comprising a cooling water circulating part that allows the cooling water to circulate through the cooling water passage,
wherein
the cooling water circulating part includes a heat exchanging part that removes heat from the cooling water, and
the oil circulating part does not include an oil cooler.

8. The stator cooling structure according to any one of claims 4 to 7, wherein the cooling water passage and the oil passage extend in a circumferential direction in an axial extending area of the stator core.

9. The stator cooling structure according to any one of claims 4 to 8, wherein
the supporting member supports the stator core in such a manner that an outer circumferential surface of the stator core comes into surface contact with an inner circumferential surface of the supporting member, and
the stator core and the cooling water can perform heat exchange through the inner circumferential surface, and the cooling water and the oil can perform heat exchange through the first partition wall part.

10. The stator cooling structure according to any one of claims 4 to 9, wherein
the supporting member has an oil dripping part in an upper region on an upper side than a center in an up-down direction of the supporting member in a mounted state, the oil dripping part allowing the oil to drip onto a coil end of a rotating electrical machine,
the oil passage communicates with the oil dripping part, and
an oil inlet part for introducing the oil into the oil passage is provided in a lower region on a lower side than the center of the supporting member in a mounted state.

11. The stator cooling structure according to any one of claims 4 to 10, wherein the oil passage includes a first oil passage part on one axial side and a second oil passage part on an other axial side.

12. The stator cooling structure according to claim 11, wherein the supporting member further forms an inlet oil passage that communicates with the first oil passage part and the second oil passage part.

13. The stator cooling structure according to claim 12, wherein the inlet oil passage includes an axial inlet oil passage part that extends in an axial direction; a first inlet oil passage part that extends in a radial direction from the axial inlet oil passage part and is connected to the first oil passage part; and a second inlet oil passage part that extends in a radial direction from the axial inlet oil passage part and is connected to the second oil passage part.

14. The stator cooling structure according to claim 13, wherein
the supporting member has an oil dripping part in an upper region on an upper side than a center in an up-down direction of the supporting member in a mounted state, the oil dripping part allowing the oil to drip onto a coil end of a rotating electrical machine,
the oil passage communicates with the oil dripping part, and
the inlet oil passage is provided in a lower region on a lower side than the center of the supporting member in a mounted state.

15. The stator cooling structure according to claim 14, wherein
the oil dripping part has a first oil dripping part on one axial side and a second oil dripping part on an other axial side, and
the first oil passage part communicates with the first oil dripping part and the second oil passage part communicates with the second oil dripping part.

16. The stator cooling structure according to claim 15, wherein
the first inlet oil passage part is connected to the first oil passage part more on an other axial side than the first oil dripping part, and
the second inlet oil passage part is connected to the second oil passage part more on one axial side than the second oil dripping part and more on an other axial side than the first inlet oil passage part.

17. The stator cooling structure according to claim 16, wherein
the first oil passage part communicates with an area from the first inlet oil passage part to the first oil dripping part, more on one axial side than a midpoint location in an axial direction between the first inlet oil passage part and the second inlet oil passage part, and
the second oil passage part communicates with an area from the second inlet oil passage part to the second oil dripping part, more on an other axial side than the midpoint location.

18. The stator cooling structure according to any one of claims 4 to 17, wherein the one or more division wall parts include a plurality of columnar parts, and the plurality of columnar parts for the cooling water passage and the plurality of columnar parts for the oil passage are disposed at different densities.

19. The stator cooling structure according to claim 18, wherein the plurality of columnar parts for the cooling water passage are disposed at a higher density than the plurality of columnar parts for the oil passage.

20. The stator cooling structure according to claim 18 or 19, wherein a groove part is provided at a connecting portion between at least one columnar part among the plurality of columnar parts for the cooling water passage and the plurality of columnar parts for the oil passage and at least any one of the inner wall part, the outer wall part, and the first partition wall part.

21. The stator cooling structure according to any one of claims 3 to 20, wherein
a formation area of the passage has a discontinuous cylindrical form in which both circumferential end parts of the formation area are separated from each other in a circumferential direction, and
the supporting member has a second partition wall part that blocks a portion between the both circumferential end parts.

22. The stator cooling structure according to claim 21, wherein
the one or more division wall parts include a plurality of columnar parts,
the supporting member forms:
an axial passage part that is adjacent to the second partition wall part from at least one circumferential side and extends in an axial direction; and
a circumferential passage part between the end wall parts on both axial sides, the circumferential passage part circumferentially communicating with the axial passage part, and
the plurality of columnar parts are disposed at a higher density at an axial end part of the axial passage part than at an axial central part of the axial passage part.

23. The stator cooling structure according to claim 22, wherein one of the end wall parts forms a recessed part at a circumferential location, on a downstream side of the axial passage part, of the circumferential passage part, the recessed part being recessed toward an axial inner side.

24. A stator cooling structure wherein
a stator core, a cooling water passage, and an oil passage are adjacent to each other in this order from a radial inner side, and
both of the cooling water passage and the oil passage are formed of a single piece member and extend in a circumferential direction in an axial extending area of the stator core.
